(19) Europäisches Patentamt
European Patent Office
Office européen des brevets

(11) **EP 3 825 846 A1**

(12) **EUROPEAN PATENT APPLICATION**

(43) Date of publication:
**26.05.2021 Bulletin 2021/21**

(51) Int Cl.:
*G06F 9/38* (2018.01)　　　*G06F 9/30* (2018.01)

(21) Application number: **20217330.8**

(22) Date of filing: **01.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **04.04.2019 CN 201910272411**
**04.04.2019 CN 201910272625**
**04.04.2019 CN 201910272660**
**19.04.2019 CN 201910320091**
**19.04.2019 CN 201910319165**
**25.04.2019 CN 201910340177**
**25.04.2019 CN 201910341003**

(62) Document number(s) of the earlier application(s) in accordance with Art. 76 EPC:
**20783678.4 / 3 800 547**

(71) Applicant: **Cambricon Technologies Corporation Limited**
**Beijing 100191 (CN)**

(72) Inventors:
• **LIU, Shaoli**
**Beijing, 100190 (CN)**
• **WANG, Bingrui**
**Beijing, 100190 (CN)**
• **LIANG, Jun**
**Beijing, 100191 (CN)**

(74) Representative: **Huang, Liwei**
**Cäcilienstraße 12**
**40597 Düsseldorf (DE)**

Remarks:
This application was filed on 28-12-2020 as a divisional application to the application mentioned under INID code 62.

(54) **DATA PROCESSING METHOD AND APPARATUS, AND RELATED PRODUCT**

(57) The present disclosure provides a data processing method and an apparatus and a related product. The products include a control module including an instruction caching unit, an instruction processing unit, and a storage queue unit. The instruction caching unit is configured to store computation instructions associated with an artificial neural network operation; the instruction processing unit is configured to parse the computation instructions to obtain a plurality of operation instructions; and the storage queue unit is configured to store an instruction queue, where the instruction queue includes a plurality of operation instructions or computation instructions to be executed in the sequence of the queue. By adopting the above-mentioned method, the present disclosure can improve the operation efficiency of related products when performing operations of a neural network model.

EP 3 825 846 A1

## Description

## Technical Field

The disclosure relates generally to the field of computer technologies, and more specifically to a data processing method and an apparatus and related products.

## Background

With the continuous development of the AI (Artificial Intelligence) technology, it has gradually obtained wide application and worked well in the fields of image recognition, speech recognition, and natural language processing, and the like. However, as the complexity of AI algorithms is growing, the amount of data and data dimensions that need to be processed are increasing. In related arts, processors usually determine the data address by obtaining parameters of instructions, and then read and use the data according to the data address, which requires those skilled in the art to set relevant parameters for data access (such as the relationship between data and data, or data dimension and data dimension, *etc.*) when designing parameters, so as to generate instructions and transmit the instructions to the processors to complete the data access. The above-mentioned method reduces the processing efficiency of the processors.

## Summary

In order to solve the technical problems, the present disclosure provides a data processing technical solution.

A first aspect of the present disclosure provides a data processing method including: when an operand of a decoded first processing instruction includes an identifier of a descriptor, obtaining content of the descriptor according to the identifier of the descriptor, where the descriptor is configured to indicate a shape of a tensor; and executing the first processing instruction according to the content of the descriptor.

A second aspect of the present disclosure provides a data processing apparatus including: a content obtaining module configured to, when an operand of a decoded first processing instruction includes the identifier of the descriptor, obtain content of a descriptor according to an identifier of the descriptor, where the descriptor is configured to indicate a shape of a tensor; and an instruction executing module configured to execute the first processing instruction according to the content of the descriptor.

A third aspect of the present disclosure provides a neural network chip including the data processing apparatus.

A fourth aspect of the present disclosure provides an electronic device including the neural network chip.

A fifth aspect of the present disclosure provides a board card including: a storage device, an interface apparatus, a control device, and the above-mentioned neural network chip. The neural network chip is connected to the storage device, the control device, and the interface apparatus respectively; the storage device is configured to store data; the interface apparatus is configured to implement data transmission between the neural network chip and an external apparatus; and the control device is configured to monitor a state of the neural network chip.

According to embodiments of the present disclosure, by introducing a descriptor indicating the shape of a tensor, the corresponding content of the descriptor can be determined when the identifier of the descriptor is included in the operand of a decoded processing instruction, and the processing instruction can be executed according to the content of the descriptor, which can reduce the complexity of data access and improve the efficiency of data access.

In order to make other features and aspects of the present disclosure clearer, a detailed description of exemplary embodiments with reference to the drawings is provided below.

## Brief Description of the Drawings

The accompanying drawings contained in and forming part of the specification together with the specification show exemplary embodiments, features and aspects of the present disclosure and are used to explain the principles of the disclosure.

Fig. 1 shows a schematic diagram of an application scenario of an operation method of a processor according to an embodiment of the present disclosure.
Fig. 2 shows a flowchart of an operation method of a processor according to an embodiment of the present disclosure.
Fig. 3a and Fig. 3b show schematic diagrams of application scenarios of an operation method of a processor according to an embodiment of the present disclosure.
Fig. 4a and Fig. 4b show schematic diagrams of application scenarios of an operation method of a processor according to an embodiment of the present disclosure.
Fig. 5a and Fig. 5b show schematic diagrams of application scenarios of an operation method of a processor according to an embodiment of the present disclosure.

Fig. 6 shows a schematic diagram of a circular buffer and storage area of an operation method of a processor according to an embodiment of the present disclosure.

Fig. 7 shows a schematic diagram of a whole storage area of an operation method of a processor according to an embodiment of the present disclosure.

Fig. 8 shows a block diagram of an operation apparatus of a processor according to an embodiment of the present disclosure.

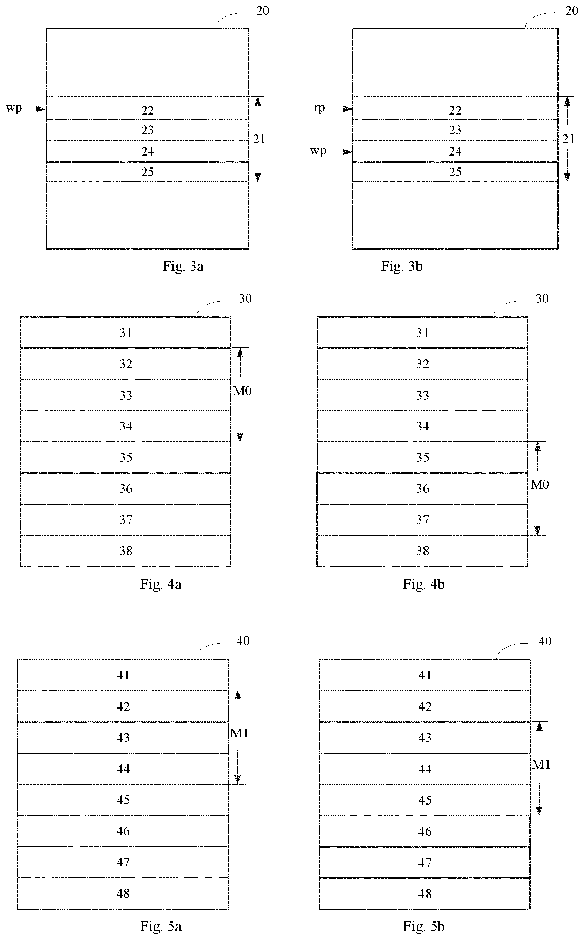

Fig. 4 shows a block diagram of a board card according to an embodiment of the present disclosure.

## Detailed Description of the Embodiments

Various exemplary embodiments, features, and aspects of the present disclosure will be described in detail below with reference to the drawings. The same marks in the drawings represent the same or similar elements. Although various aspects of the embodiments are shown in the drawings, the drawings are not necessarily drawn to scale unless specifically noted.

The "exemplary" as used herein means "serving as an example, embodiment, or illustration." Any embodiment described herein as "exemplary" is not necessarily to be interpreted as superior to or better than other embodiments.

In addition, in order to better illustrate the present disclosure, a lot of specific details are given in the detailed description below. Those skilled in the art should understand that the present disclosure can be implemented without certain specific details. In some embodiments, methods, means, components, and circuits that are well known to those skilled in the art have not been described in detail in order to highlight the main idea of the present disclosure.

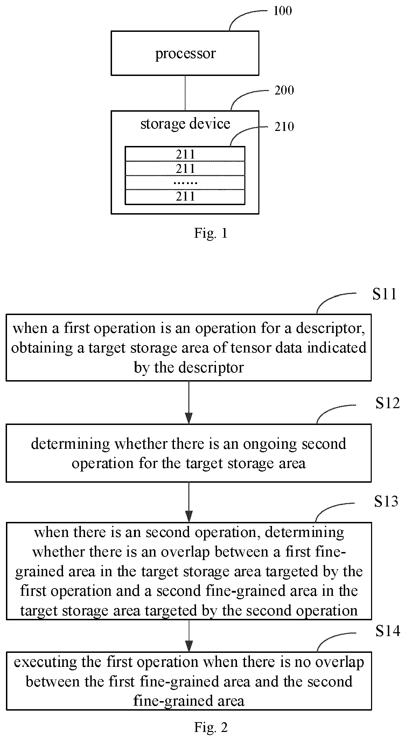

The present disclosure provides an operation method of a processor. Fig. 1 shows a schematic diagram of an application scenario of an operation method according to an embodiment of the present disclosure. A processor 100 may be a general-purpose processor (such as a CPU (central processing unit), a GPU (graphics processor)) and a dedicated processor (such as an AI processor, a scientific computing processor, or a digital signal processor, *etc.*). The present disclosure does not limit the type of the processor. A storage device 200 includes at least one target storage area 210, where the target storage area 210 may be a storage area of the tensor data indicated by the descriptor. It can be understood that the processor can access a target storage area 210 by executing a reading operation or a writing operation, where a process of executing a reading operation for a target storage area 210 by the processor may include: the processor obtaining the tensor data in the target storage area 210 through the descriptor; and a process of executing a writing operation for a target storage area 210 by the processor may include: the processor writing the tensor data indicated by the descriptor into the target storage area 210. In the related art, since the processor can execute a plurality of operations in parallel, in order to avoid conflicts, when a plurality of operations executed by the processor in parallel are all for a certain target storage area 210, the processor will only execute one of the a plurality of operations, while other operations are blocked, which may reduce the efficiency of the processor. The operation method of the processor provided by the present disclosure further divides the target storage area 210 as a plurality of fine-grained areas 211, and when a plurality of operations executed by the processor in parallel are all for a certain target storage area 210, the processor may determine whether the fine-grained areas 211 targeted by the a plurality of operations overlap, and if the fine-grained areas 211 targeted by the respective operations do not overlap, the a plurality of operations can be executed in parallel, which may greatly improve the efficiency of the processor. It should be noted that the storage device 200 may be provided inside the processor (for example, an on-chip cache or a register, *etc.*), or may be provided outside the processor (for example, an off-chip memory, *etc.*) and can execute data communication with the processor. The present disclosure does not limit the type of storage device. The operations involved in the present disclosure may be basic operations supported by hardware of the processor, or micro-instructions (such as request signals, *etc.*) that are obtained after the basic operations are parsed. The present disclosure does not limit the specific type of operations. The processor in the present disclosure can execute two operations in parallel, and can also execute more than two operations in parallel. The present disclosure does not limit the count of operations executed in parallel.

Fig. 2 shows a flowchart of an operation method of a processor according to an embodiment of the present disclosure. The operation method of the processor can be applied to a processor. As shown in Fig. 2, the operation method of the processor may include:

a step S11: when a first operation is an operation for a descriptor, obtaining a target storage area of tensor data indicated by the descriptor.

The first operation may be a reading operation or a writing operation for the descriptor. The present disclosure does not limit the specific type of the first operation. The descriptor can be used to indicate the shape of the tensor. The tensor may have various forms of data composition, and the tensor may have different dimensions, for example, a scalar can be viewed as a 0-dimensional tensor, a vector can be viewed as a 1-dimensional tensor, and a matrix can be a tensor of two or more dimensions. The shape of a tensor includes dimensions of the tensor and a size of each dimension of each tensor and the like. For example, for a tensor:

$$\begin{bmatrix} 1 & 2 & 3 & 4 \\ 11 & 22 & 33 & 44 \end{bmatrix},$$

the shape of the tensor can be described by the descriptor as (2, 4), in other words, the tensor is a 2-dimensional tensor represented by two parameters, and a size of a first dimension (column) of the tensor is 2, a size of a second dimension (row) of the tensor is 4. It should be noted that the present disclosure does not limit the manner in which the descriptor indicates the shape of the tensor.

In a possible implementation method, an operand of the first operation may be one or more descriptors. The target storage area may be a storage area for tensor data indicated by one or more descriptors in the operand of the first operation, or may be a storage area for tensor data indicated by any descriptor in the operand of the first operation. A whole storage area where the target storage area is located may be an internal storage of the processor (such as an on-chip cache or a register, *etc.*), or an external storage connected to the processor (such as an off-chip storage, *etc.*).

In a possible implementation method, the target storage area may include at least one fine-grained area. A method for determining the size and/or quantity of the fine-grained areas may include one or more of a determining method according to hardware design, a determining method according to related operations of the tensor data indicated by the descriptor, and a defining method according to related parameters in the operations. The determining method according to hardware design may refer to determining a size of a fine-grained area during hardware design, for example, one or more rows of the target storage area are determined as a fine-grained area. The determining method according to related operations of the tensor data indicated by the descriptor includes: determining according to processing requirements, storage methods, or transmission methods of the tensor data indicated by the descriptor. For example, the tensor data indicated by the descriptor is two-dimensional matrix data. A size the matrix data is M*Q (M and Q are all positive integers), indicating the count of bytes occupied by the storage, in other words, a row of the matrix data is M bytes and the matrix data has Q rows in total, then it can be determined that M bytes are a fine-grained area, and the target storage area corresponding to the tensor data indicated by the descriptor includes Q fine-grained areas. The determining method according to related parameters in the operations includes dividing the target storage area as a plurality of fine-grained areas according to the size and/or quantity of fine granularity carried in the operations. It should be noted that the sizes of the plurality of fine-grained areas may be the same or different. For example, the count of data bits of each fine-grained area may be 64 bits, 256 bits, 512 bits, and the like. The size and/or quantity of each fine-grained area can be determined according to requirements, which is not limited in the present disclosure.

In a possible implementation method, when the first operation is an operation for the descriptor, the target storage area of the tensor data indicated by the descriptor may be obtained through the descriptor targeted by the first operation, thereby determining the target storage area targeted by the first operation.

The operation method of the processor may further include:
a step S12: determining whether there is an ongoing second operation for the target storage area.

The second operation may be a reading operation or a writing operation for the descriptor. The present disclosure does not limit the specific type of the second operation. The second operation may include one or more operands. The operands of the second operation may include various data such as descriptors, immediate data, and tensor data. The present disclosure does not limit the specific number and type of operands of the second operation.

In a possible implementation method, it can be determined whether there is an ongoing second operation for the target storage area according to the occupation state of the target storage area. For example, the processor may determine whether the target storage area is occupied by querying an occupancy state list, where if the target storage area is occupied, it is determined that there is an ongoing second operation for the target storage area. The occupancy state list may be preset and stored in a storage, or may be generated before the processor starts to execute a certain task, and released after the task is completed. When the occupancy state of each storage area changes, the processor updates the content of the occupancy state list to record the occupancy state of each storage area.

In a possible implementation method, it can be determined whether there is an ongoing second operation for the target storage area by querying the execution state of each operation. For example, the storage area corresponding to the operand of each operation may be recorded, and the execution state of each operation may be further recorded. If the operation for the target storage area has not been completed, it is determined that there is an ongoing second operation for a target operation area. It can be determined whether the target storage area corresponding to the operand is occupied by determining the occupancy state of the operand, thereby determining whether there is an ongoing second operation for the target storage area. The present disclosure does not limit the basis for determining whether there is an ongoing second operation for the target storage area.

In a possible implementation method, the second operation may be an operation for the descriptor. The descriptor targeted by the second operation may be same as the descriptor targeted by the first operation, then the storage area of the descriptor targeted by the second operation is same as the target storage area, and when the second operation is not completed, there is a second operation for the target storage area; or if the storage area of the descriptor targeted by the second operation has an overlapping area with the target storage area, and when the second operation is being executed on the overlapping area, there is a second operation for the target storage area.

In a possible implementation method, before the first operation for the target storage area is executed, it may be determined whether there is an ongoing second operation for the target storage area.

In a possible implementation method, during the execution of the first operation for the target storage area, it may be also determined whether there is an ongoing second operation for the target storage area.

The operation method of the processor may further include:

a step S13, when there is an second operation, determining whether there is an overlap between a first fine-grained area in the target storage area targeted by the first operation and a second fine-grained area in the target storage area targeted by the second operation.

The first fine-grained area and the second fine-grained area may be any fine-grained area in the plurality of fine-grained areas in the target storage area. The entire storage area where the target storage area is located may be divided as a plurality of fine-grained areas, and the sizes of the fine-grained areas in the entire storage area targeted by the operations are the same.

Optionally, during each operation, the storage area targeted by the operand is divided as a plurality of fine-grained areas according to the fine-grained division information carried in each operation, and during different operations, same storage areas may be divided as a plurality of fine-grained areas with different granularities. The first fine-grained area may be an arbitrary fine-grained area among a plurality of fine-grained areas obtained after the target storage area is divided during the first operation; and the second fine-grained area may be an arbitrary fine-grained area among a plurality of fine-grained areas obtained after the storage area where the operand is located is divided during the second operation. The size of the first fine-grained area and that of the second fine-grained area may be different.

For example, the first operation may carry the size of the first fine granularity (the count of data bits of each fine-grained area), and the size of the first fine granularity may be set to 64 bits, and the second operation may carry the size of the second fine granularity (for example, the count of data bits of each fine-grained area), and the size of the second fine granularity may be set to 256 bits. In other words, during the first operation, every 64 bits are taken as a fine-grained area, and during the second operation, every 256 bits are taken as a fine-grained area. For another example, both of the size of the fine granularity carried by the first operation and the size of the fine granularity carried by the second operation (for example, the count of data bits of each fine-grained area) are 512 bits. Similarly, the first operation may also carry the count of the first fine granularity (for example, the count of the first fine granularity may be set to 4), and the second operation may also carry the count of the second fine granularity (for example, the count of the second fine granularity may be set to 8). In other words, during the first operation, the target storage area is divided as 4 fine-grained areas, and during the second operation, the target storage area is divided as 8 fine-grained areas. It can be understood that the two parameters, which are the size of the fine granularity and the count of the fine granularity, can also be carried at the same time in the operation. The size and/or quantity of each fine-grained area can be determined according to requirements, which is not limited in the present disclosure.

It can be understood that the operation for the target storage area is an operation for each fine-grained area in the target storage area. For example, a target storage area A is from the first row to the tenth row, each row is a fine-grained area, and the target storage area A includes 10 fine-grained areas. The writing operation for the target storage area A can be regarded as a writing operation for the 10 fine-grained areas, where the execution process is: writing the first fine-grained area (in the first row), writing the second fine-grained area (the second row) after the first fine-grained area is written, and writing the third fine-grained area (the third row) after the second fine-grained area is written, and so on, until the tenth fine-grained area (the tenth row) is written, and then the writing operation for the target storage area A is completed.

When there is an operation for the target storage area, as the operation is executed, the fine-grained areas in the target storage area may include fine-grained areas that have been processed, fine-grained areas that are being processed, and fine-grained areas that have not been processed. The state of a fine-grained area currently targeted by the operation is a state of being processed. Therefore, when there is an operation for the target storage area, it may be considered that there is an operation for a fine-grained area in the target storage area, and the fine-grained area being processed is the fine-grained area to which the operation is currently targeted.

In a possible implementation method, a first fine-grained area in the target storage area targeted by the first operation may include a fine-grained area in the target storage area targeted by the first operation to be executed, which is usually a first fine-grained area. Optionally, the first fine-grained area in the target storage area targeted by the first operation may further include any fine-grained area in the target storage area currently targeted by the first operation which is being executed. A second fine-grained area in the target storage area currently targeted by the second operation may be any fine-grained area in the target storage area currently targeted by the second operation which is being executed.

In a possible implementation method, it can be determined whether there is an overlap between the first fine-grained area in the target storage area targeted by the first operation and the second fine-grained area in the target storage area targeted by the second operation according to a physical address, a position of a pointer, an identifier of the fine-grained area, and the like. For example, the current physical address of each operation can be recorded. In this way, according to the current physical address of the first operation and the current physical address of the second operation, and the correspondence between the physical address and the fine-grained area, the first fine-grained area in the target storage area currently targeted by the first operation and the second fine-grained area in the target storage area currently targeted by the second operation can be determined respectively, and then whether there is an overlap between the first fine-grained area and the second fine-grained area can further be determined. The physical address may include one or more of a start address of the fine-grained area, an end address of the fine-grained area, an address of a preset position of the fine-grained area, and an address of a real-time operation of the fine-grained area. For another example, a pointer can be preset for each operation, and the pointer points to the fine-grained area to which the operation is currently targeted. According to the position of the pointer of the first operation, and the position of the pointer of the second operation, the first fine-grained area in the target storage area currently targeted by the first operation and the second fine-grained area in the target storage area currently targeted by the second operation can be determined respectively, and then whether there is an overlap between the first fine-grained area and the second fine-grained area can be further determined. For another example, an identifier for each fine-grained area may be preset, and then whether there is an overlap between the first fine-grained area and the second fine-grained area can be determined by recording the identifier of the fine-grained area currently targeted by the operation. The identifier may include any combination of letters, numbers, or symbols. Other ways may be adopted to determine whether there is an overlap between the first fine-grained area and the second fine-grained area. The present disclosure does not limit the basis for determining whether there is an overlap between the first fine-grained area and the second fine-grained area.

The operation method of the processor may further include:
a step S14, executing the first operation when there is no overlap between the first fine-grained area and the second fine-grained area.

In a possible implementation method, if there is no overlap between the first fine-grained area in the target storage area targeted by the first operation and the second fine-grained area in the target storage area targeted by the second operation, the first fine-grained area may be a fine-grained area that has been processed by the second operation, or a fine-grained area that does not need to be processed by the second operation. At this time, the execution of the first operation will not affect the process and result of the second operation, and thus the first operation can be executed.

According to the embodiment, when the first operation is an operation for the descriptor, the target storage area of the tensor data indicated by the descriptor may be obtained. When there is an ongoing second operation for the target storage area, whether there is an overlap between the first fine-grained area in the target storage area currently targeted by the first operation and the second fine-grained area in the target storage area currently targeted by the second operation may be determined. If there is no overlap between the first fine-grained area in the target storage area currently targeted by the first operation and the second fine-grained area in the target storage area currently targeted by the second operation, the first operation will be executed. In this way, the first operation will be executed if there is no overlap between the fine-grained area currently targeted by the first operation and the fine-grained area currently targeted by the second operation, so that the first operation and the second operation can be executed to process the target storage area at the same time, which improves the processing efficiency of the processor.

In a possible implementation method, the operation method of the processor further includes: when there is an overlap between the first fine-grained area and the second fine-grained area, blocking the first operation.

In a possible implementation method, a situation that the first fine-grained area overlaps with the second fine-grained area includes that the first fine-grained area completely overlaps or partially overlaps with the second fine-grained area. When there is an overlap between the first fine-grained area and the second fine-grained area, if the first operation is executed, the operation of the first operation on the overlap may affect the execution of the second operation, resulting in an inaccurate operation result of the second operation, and the operation of the first operation on the overlap may further affect the execution of the first operation, resulting in an inaccurate operation result of the first operation. At this time, the first operation may be blocked, in other words, the first operation may be suspended, and the first operation may be executed after the second fine-grained area in the target storage area currently targeted by the second operation has been processed. In other words, when there is no overlap between the first fine-grained area and the second fine-grained area, the first operation will be executed.

In the embodiment, by blocking the first operation when there is an overlap between the first fine-grained area and the second fine-grained area, problems such as operation errors and inaccurate operation results due to the overlap between the fine-grained areas of each operation may be avoided, and the correctness of each operation may be ensured.

Fig. 3a and Fig. 3b show schematic diagrams of application scenarios of an operation method of a processor according to an embodiment of the present disclosure. As shown in Fig. 3a and Fig. 3b, an entire storage area 20 includes a target storage area 21, where the target storage area 21 is divided as four fine-grained areas: a fine-grained area 22, a fine-grained area 23, a fine-grained area 24, and a fine-grained area 25.

As shown in Fig. 3a, currently, only a writing operation is included. A writing pointer wp represents the fine-grained area in the target storage area 21 currently targeted by the writing operation. At the beginning of the writing operation, the writing pointer wp points to the fine-grained area 22, it can be firstly determined whether there is an ongoing second operation for the target storage area 21, where if there is no second operation, then the writing operation will be executed on the fine-grained area 22. When the writing operation executed on the fine-grained area 22 is completed, the writing pointer wp increases, that is, wp++, and the writing pointer points to the next fine-grained area 23, and then it can be determined whether there is an ongoing second operation for the target storage area 22, where if there is no second operation, then the writing operation will be executed on the fine-grained area 23. When the writing operation executed on the fine-grained area 23 is completed, the writing pointer wp increases, and the writing pointer points to the next fine-grained area 24, and then it can be determined whether there is an ongoing second operation for the target storage area 23, where if there is no second operation, then the writing operation will be executed on the fine-grained area 24.

As shown in Fig. 3b, currently, a reading operation and a writing operation are included, where the reading operation is a first operation, and the writing operation is a second operation. And the writing pointer wp of the writing operation and a reading pointer rp of the reading operation represent the fine-grained areas currently targeted by the writing operation and the reading operation, respectively.

During the execution of the reading operation (the first operation), it needs to be determined whether there is an ongoing second operation for the target storage area 21. It is determined that there is an ongoing second operation (the writing operation) for the target storage area 21, and it is further determined whether there is an overlap between the first fine-grained area (the fine-grained area 22 in Fig. 3b) in the target storage area 21 currently targeted by the reading operation (the first operation) and the second fine-grained area (the fine-grained area 24 in Fig. 3b) in the target storage area 21 currently targeted by the writing operation (the second operation). For example, it can be determined that there is no overlap between the first fine-grained area and the second fine-grained area according to the serial numbers of the fine-grained areas (22 and 24), or according to the relationship between rp and wp (rp=0, wp=2, rp<wp), and then the reading operation (the first operation) will be executed.

When the reading operation executed on the fine-grained area 22 is completed, the reading pointer rp increases, that is, rp++, and the reading pointer points to the next fine-grained area 23, and then it can be determined whether there is an overlap between the first fine-grained area and the second fine-grained area, where if there is no overlap between the first fine-grained area and the second fine-grained area, then the first operation will be executed on the fine-grained area 23. When the reading operation executed on the fine-grained area 23 is completed, the reading pointer rp increases, and the reading pointer points to the next fine-grained area 24, and then it can be determined whether there is an overlap between the first fine-grained area and the second fine-grained area, where if the serial numbers of the fine-grained area are the same or rp=wp, it can be determined that there is an overlap between the first fine-grained area in the target storage area 21 currently targeted by the first operation and the second fine-grained area in the target storage area 21 currently targeted by the second operation, and then the first operation cannot be executed, and the first operation will be blocked. When the second operation executed on the fine-grained area 24 is completed, the writing pointer wp increases, and the writing pointer points to the next fine-grained area 25. If the serial numbers of the fine-grained areas are different (24 and 25) or the pointer rp<wp, the first operation can be executed.

In a possible implementation method, at least one of the first operation and the second operation may be a writing operation. In other words, the method provided in the embodiment of the present disclosure may be adopted when the operation on the operands is a write-modify-read operation (the second operation is the writing operation and the first operation is the reading operation), a read-modify-write operation (the second operation is the reading operation and the first operation is the writing operation), or a write-modify-write operation (both the second operation and the first operation are writing operations).

For example, if the first operation is a reading operation for a descriptor and the second operation is a writing operation, the tensor data indicated by the descriptor read by the first operation needs to be data after the second operation (the writing operation) is executed; and the serial number of the second fine-grained area in the target storage area targeted by the second operation is 8, then the first operation can only read the data in the fine-grained area with a serial number smaller than 8. In other words, if the first fine-grained area in the target storage area to which the first operation is currently targeted is any one of the fine-grained areas numbered 1 to 7, the first operation can be executed.

In a possible implementation method, if the first operation and the second operation are both reading operations, the relationship between the fine-grained areas of the first operation and the second operation will not affect the operation result, and the method provided in the embodiment of the present disclosure may be adopted, or the first operation may be executed directly without determining the fine-grained areas.

In the embodiment, if at least one of the first operation and the second operation is a writing operation, according to the method provided in the embodiment of the present disclosure, by dividing the target storage area of the tensor data indicated by the descriptor as one or more fine-grained areas, and executing operations in units of fine-grained areas, operations such as reading-writing, writing-reading, and a write-modify-write operation can be executed correctly to obtain accurate results, besides, the waiting time between operations can be reduced and the efficiency of the processor can be improved.

In a possible implementation method, the size and/or quantity of the fine-grained areas may be determined according to at least one of the area where the data with set length is located and the area where the data with set dimension is located.

It can be understood that the size and/or quantity of the fine-grained areas may be preset before the operation is generated, or may be determined in real time when each operation is generated. The presetting the size and/or quantity of the fine-grained areas before the operation may include: determining the size and/or quantity of the fine-grained areas according to at least one of the area where the data with preset length is located and the area where the data with preset dimension is located. The data with preset length and the data with preset dimension may be independent of the operands of each operation, or may be comprehensively determined according to the operands of each operation in advance, which may be determined according to actual requirements. The determining the size and/or quantity of the fine-grained areas in real time when each operation is generated may include determining data with preset length or data with preset dimension according to the operands of each operation, in other words, at least one of the area where the data with preset length is located and the area where the data with preset dimension is located can be determined in real time according to the operands of each operation, and then the size and/or quantity of the fine-grained areas may be determined.

For example, the size and/or quantity of the fine-grained areas can be determined according to the size of the area where the data with preset length is located. For example, the size of the fine-grained area can be set according to the size of the target storage area where the data with preset length among the tensor data indicated by the descriptor is located, and the area may have a fixed bit width. For example, tensor data B indicated by the descriptor is 20*10*5 three-dimensional data, the tensor data B is stored in 40*25 manner (that is, there are 40 bits of data in each row, and there are total 25 rows) in the target storage area, then the length may be set as 40 bits, each row of the target storage area is set as a fine-grained area, the target storage area of tensor data B indicated by the descriptor may be divided as 25 fine-grained areas; or every 5 rows of the target storage area may be set as a fine-grained area, and the target storage area of tensor data B indicated by the descriptor may be divided as 5 fine-grained areas, which is not limited in the present disclosure.

It should be noted that the size and/or quantity of the fine-grained areas can be determined in the target storage area according to at least one of the area where the data with preset length is located and the area where the data with preset dimension is located, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the applicable division range of the size and/or quantity of the fine-grained areas based on at least one of the area where the data with preset length is located and the area where the data with preset dimension is located.

In a possible implementation method, the size and/or quantity of the fine-grained areas may also be determined according to the size of the area where the data with preset dimension is located. For example, tensor data C indicated by the descriptor is 20*10 two-dimensional data. A target storage area of the tensor data C indicated by the descriptor may be divided as 10 fine-grained areas according to data with preset 1 dimension and preset length of 20.

In addition, the size and/or quantity of the fine-grained areas may also be determined according to the size of the area where the data with preset length is located in the target storage area of the tensor data indicated by the descriptor and the size of the area where the data with preset dimension is located in the target storage area of the tensor data indicated by the descriptor. For example, for the tensor data C indicated by the descriptor, fine-grained areas may be divided according to data with preset 2 dimensions and preset size of 4*2, thereby dividing the target storage area of the tensor data C indicated by the descriptor as 25 fine-grained areas.

It should be understood that those skilled in the art may set the size and/or quantity of the divided fine-grained areas according to actual conditions, which is not limited in the present disclosure.

In the embodiment, the size and/or quantity of the fine-grained areas can be determined according to the size of the area where the data with preset length is located and/or the size of the area where the data with preset dimension is located, where the fine-grained areas may be divided according to data characteristics, which can improve the flexibility of dividing the fine-grained areas, thereby improving the efficiency of the execution of a plurality of operations, and the division results of the fine-grained areas can be more in line with the characteristics of different operands, thereby adapting to the processing requirements of different types of operands, and then the overall execution efficiency of a plurality of operations can be improved.

In a possible implementation method, the size and/or quantity of the fine-grained areas may be determined according to at least one of the computing capability of the hardware and the bandwidth of the hardware.

The computing capability of the hardware may refer to the amount of data processed in parallel by the hardware in one computing cycle, and the bandwidth of the hardware may refer to the data transmission capability, such as the amount of data transmitted per unit time.

For example, for the processor that applies the operation method, the computing capability of the hardware of the processor may be: processing 100-bit of data in parallel in one computing cycle, and the bandwidth of the hardware of the processor may be: transmitting 200-bit of data per unit time. A target storage area with a size of 1000-bit data may be divided as 10 fine-grained areas according to the computing capability of the hardware, where each fine-grained area includes 100-bit data; or the target storage area with a size of 1000-bit data may be divided as 5 fine-grained areas according to the bandwidth of the hardware, where each fine-grained area includes 200-bit data.

It should be understood that different processor may have different computing capability of the hardware and the bandwidth of the hardware, and the present disclosure does not limit the computing capability of the hardware and the bandwidth of the hardware.

It should be understood that the size and/or quantity of the fine-grained areas in the target storage area may be determined according to at least one of the computing capability of the hardware and the bandwidth of the hardware, or the size and/or quantity of the fine-grained areas can be determined in the target storage area in a whole storage area, or the size and/or quantity of the fine-grained areas can be determined in other areas in the whole storage area. The above-mentioned embodiment only gives one of the cases. The present disclosure does not limit the determining the applicable division range of the size and/or quantity of the fine-grained areas based on at least one of the computing capability of the hardware and the bandwidth of the hardware.

By adopting the above-mentioned method provided by the present disclosure, the size and/or quantity of the fine-grained areas may be determined according to the processing capability of the processor (the computing capability of the hardware and/or the bandwidth of the hardware, so that the division results of the fine-grained area are more in line with the requirements of different operating environment of the hardware, and the operation executed based on the fine-grained areas is synchronized with the processing power of the processor, and the execution efficiency of the hardware can be brought into play as much as possible, and then the processing efficiency of the processor may be improved.

In a possible implementation method, the first operation may be an operation in a first processing instruction, the second operation may be an operation in a second processing instruction, and the second processing instruction may be a processing instruction prior to the first processing instruction in the instruction queue.

The first processing instruction and the second processing instruction may include one or more of a data access instruction, an operation instruction, a synchronization instruction, and a communication instruction. For example, an instruction is a reading and operation instruction. The present disclosure does not limit the specific types of the first processing instruction and the second processing instruction.

In a possible implementation method, the first instruction may have a dependency relationship with the second instruction, for example, the first instruction needs to use a computation result of the second instruction. The first instruction may also have no dependency relationship with the second instruction. When the first instruction have a dependency relationship with the second instruction, the first instruction and the second instruction can be executed in parallel through the method in the embodiment of the present disclosure.

In the embodiment, the first operation and the second operation may be operations in different instructions. By adopting the method in the embodiment of the present disclosure, the instruction execution efficiency canbe improved.

In a possible implementation method, the first operation and the second operation may also be two operations in a same processing instruction, where the second operation may be independent of the first operation, or the second operation may be based on the result of the first operation. The processing instruction may include one or more of a data access instruction, an operation instruction, a synchronization instruction, and a communication instruction, for example, if the instruction is a "reading and adding" operation instruction, the first operation is a reading operation, and the second operation is an addition operation. The present disclosure does not limit the specific type of the processing instruction.

In a possible implementation method, the operation method of the processor further includes: recording a first position information of a first fine-grained area currently operated by the first operation and a second position information of a second fine-grained area currently operated by the second operation.

The step S14 may include: when the first position information is inconsistent with the second position information, executing the first operation.

In a possible implementation method, position information may include identification information of the fine-grained areas. The identification information may include any combination of numbers, letters and symbols, which is not limited in the present disclosure.

For example, the position information can be represented by the serial numbers of the fine-grained areas. The target storage area can be divided as 6 fine-grained areas, which are sequentially numbered 0-5. When the first operation and the second operation for the target storage area are executed, the first position information (for example, the serial number is 2) of the first fine-grained area currently operated by the first operation and the second position information (for example, the serial number is 5) of the second fine-grained area currently operated by the second operation may be recorded, respectively; then it can be known that the first position information is not consistent with the second position information according to the relationship between the serial numbers (2<5); at this time, the first operation can be executed.

In a possible implementation method, the position information may include address information of the fine-grained areas. The address information may include one or more of a start address of the fine-grained area, an end address of the fine-grained area, an address of a preset position of the fine-grained area, and an address offset. For example, the position information of a fine-grained area is ADDR1515-ADDR1531.

By adopting the above-mentioned method provided by the present disclosure, the position information can be used to directly and efficiently determine whether there is an overlap between the first fine-grained area and the second fine-grained area, and determine whether to execute the first operation, which can improve the execution efficiency of the processor.

In a possible implementation method, the first position information may include a first count of fine-grained areas that have been processed by the first operation, and the second position information may include a second count of fine-grained areas that have been processed by the second operation.

When the first position information is inconsistent with the second position information, the first operation may be executed, which may include: when the first operation is an operation after the second operation, and the first count is less than the second count, the first operation is executed.

For example, the first operation is an operation after the second operation, and the target storage area of the first operation is divided as 6 fine-grained areas, and the position information of the 6 fine-grained areas can be represented by the count of fine-grained areas that have been completed. When the first operation and the second operation for the target storage area are executed, a first count of fine-grained areas (for example, the first count is 3) that has been processed by the first operation and a second count of fine-grained areas (for example, the second count is 5) that has been processed by the second operation may be recorded, respectively; and then according to the executing order of the first operation and the second operation, it can be known that the first operation is an operation after the second operation, and the first count 3 is less than the second count 5, at this time, the first operation can be executed.

By adopting the above-mentioned method provided by the present disclosure, according to the count of fine-grained areas that have been completed, it can be intuitively determined whether there is an overlap between the first fine-grained area and the second fine-grained area, so that whether to execute the first operation can be determined, which can simplify the determination process and improve the execution efficiency of the processor.

In a possible implementation method, the target storage area may include an operable area and an inoperable area. The step S13 may include: when there is a second operation and the first fine-grained area in the target storage area currently targeted by the first operation is located in the operable area, determining whether there is an overlap between the first fine-grained area in the target storage area currently targeted by the first operation and the second fine-grained area in the target storage area currently targeted by the second operation.

In a possible implementation method, the target storage area may include one or more inoperable areas, and may also include continuous or discontinuous inoperable areas.

In a possible implementation method, the target storage area may include one or more operable areas, and may also include continuous or discontinuous operable areas, which is not limited in the present disclosure.

In a possible implementation method, when the first operation is an operation for the descriptor, the target storage area of the tensor data indicated by the descriptor can be obtained firstly, and then it is determined whether there is an ongoing second operation for the target storage area; when there is a second operation, it is determined whether the first fine-grained area in the target storage area targeted by the first operation is located in the operable area; and when there is a second operation, and the first fine-grained area in the target storage area targeted by the first operation is located in the operable area, then it is determined whether there is an overlap between the first fine-grained area in the target storage area targeted by the first operation and the second fine-grained area in the target storage area targeted by the second operation; and when there is no overlap between the first fine-grained area and the second fine-grained area, the first operation will be executed.

In a possible implementation method, the inoperable area may include areas where operations are prohibited and areas where operations are not prohibited. If the first operation is a writing operation for the descriptor, when part of the tensor data indicated by the descriptor cannot be modified, the storage area of the part of the tensor data can be set as an area where operations are prohibited to avoid accidentally modifying the part of tensor data. If the ongoing second operation is a reading operation (reading-writing operation) to read data before the first operation, one or more fine-grained areas where the second operation is located can be set as an area where operations are not prohibited; after the data in the area where operations are not prohibited has been read by adopting the second operation, the area where operations are not prohibited area can be changed to an operable area. The present disclosure does not limit the classification and division of inoperable area.

In the embodiment, whether the fine-grained area of the first operation is operable can be determined firstly, and then the relationship between the fine-grained areas of different operations may be determined, which improves the efficiency of determination, and protects the specified data to prevent wrong operations. In addition, it is also possible to prohibit reading and writing on a specified space, thereby reserving this space for executing other operations, which further improves the flexibility of the processor when executing fine-grained synchronization.

In a possible implementation method, the inoperable area may be a plurality of fine-grained areas including the second fine-grained area, and the position of the second fine-grained area in the inoperable area is updated with the operating position of the second operation. The operation method of the processor further includes: after the second fine-grained area in the target storage area targeted by the second operation is moved out of the inoperable area, updating the position of the inoperable area.

In other words, the inoperable area (a plurality of fine-grained areas including the second fine-grained area) may not be updated with the update of the second fine-grained area in the target storage area targeted by the second operation; after the second fine-grained area in the target storage area is moved out of the inoperable area, the position of the inoperable area is updated. For example, the inoperable area may be R fine-grained areas (R is an integer greater than 1) including the second fine-grained area, and the current inoperable area includes a second fine-grained area to a 2+R-1-th fine-grained area. When R fine-grained areas in the inoperable area have been executed by adopting the second operation, the R fine-grained areas are moved out of the inoperable area, and then the position of the inoperable area is updated with the position of the fine-grained areas targeted by the second operation. The updated inoperable area includes a 2+R-th fine-grained area to a 2+R+R-1-th fine-grained area, where the value of R can be determined arbitrarily according to the demands.

Fig. 4a and Fig. 4b show schematic diagrams of application scenarios of an operation method of a processor according to an embodiment of the present disclosure. As shown in Fig. 4a, a target storage area 30 includes 8 fine-grained areas, where the operable area includes 5 fine-grained areas (a fine-grained area 31, a fine-grained area 35, a fine-grained area 36, a fine-grained area 37, and a fine-grained area 38); an inoperable area M0 includes 3 fine-grained areas (a fine-grained area 32, a fine-grained area 33, and a fine-grained area 34). The second fine-grained area in the target storage area 30 currently targeted by the second operation is the fine-grained area 32.

After the second operation has been executed on the fine-grained area 32, the second fine-grained area in the target storage area 30 currently targeted by the second operation is the fine-grained area 33, at this time, the second fine-grained area (the fine-grained area 33) in the target storage area 30 currently targeted by the second operation is not moved out of the inoperable area, and the position of the inoperable area is not updated. After the second operation has been executed on the fine-grained area 33, the second fine-grained area in the target storage area 30 currently targeted by the second operation is the fine-grained area 34, at this time, the second fine-grained area (the fine-grained area 34) in the target storage area 30 currently targeted by the second operation is not moved out of the inoperable area, and the position of the inoperable area is not updated. After the second operation has been executed on the fine-grained area 34, the second fine-grained area in the target storage area 30 currently targeted by the second operation is the fine-grained area 35, at this time, the second fine-grained area (the fine-grained area 35) in the target storage area 30 currently targeted by the second operation has been moved out of the inoperable area, and then the position of the inoperable area is updated to the fine-grained areas 35, 36, and 37. It should be noted that the present disclosure does not limit the size of the inoperable area.

As shown in Fig. 4b, after the position of the inoperable area is updated, in the target storage area 30, the operable area includes 5 fine-grained areas (the fine-grained area 31, the fine-grained area 32, the fine-grained area 33, the fine-grained area 34, and the fine-grained area 38), and the inoperable area M0 includes 3 fine-grained areas (the fine-grained area 35, the fine-grained area 36, and the fine-grained area 37).

By adopting the above-mentioned method provided by the present disclosure, there is no need to update the position of the inoperable area in real time, which could reduce the overhead of updating the inoperable area.

In a possible implementation method, the inoperable area may include a plurality of fine-grained areas including the second fine-grained area, and the second fine-grained area is located at a set position in the inoperable area, and the position of the inoperable area is updated with the operating position of the second operation.

In other words, when the inoperable area includes a plurality of fine-grained areas including the second fine-grained area, the position of the second fine-grained area in the inoperable area (such as a middle position and a lowest position) can be set, and the position of the inoperable area is updated with the operating position of the second operation. For example, the inoperable area may include R fine-grained areas including the second fine-grained area, and the current inoperable area includes a second fine-grained area to a 2+R-1-th fine-grained area, and the set position of the second fine-grained area in the inoperable area is the S-th (S≤R) fine-grained area. After the second operation has been executed on the on the current fine-grained area, the second operation is executed on the next fine-grained area, at this time, the position of the inoperable area is updated with the operating position of the second operation, and the updated inoperable area includes a 2+1-th fine-grained area to a 2+R-th fine-grained area, where the value of R and S may be determined according to requirements. The present disclosure does not limit the count of fine-grained areas included in the inoperable area and the position of the second fine-grained area in the inoperable area.

Fig. 5a and Fig. 5b show schematic diagrams of application scenarios of an operation method of a processor according to an embodiment of the present disclosure. As shown in Fig. 5a, the target storage area 40 includes 8 fine-grained areas, where the operable area includes 5 fine-grained areas (a fine-grained area 41, a fine-grained area 45, a fine-grained area 46, a fine-grained area 47, and a fine-grained area 48), and the inoperable area M1 includes 3 fine-grained areas (a fine-grained area 42, a fine-grained area 43, and a fine-grained area 44). The second fine-grained area in the target storage area 40 currently targeted by the second operation is set as a second fine-grained area located in the inoperable area M1, in other words, the fine-grained area 43.

After the second operation has been executed on the fine-grained area 43, the second fine-grained area in the target storage area 40 currently targeted by the second operation is the fine-grained area 44, at this time, the position of the inoperable area is updated with the operating position of the second operation, so that the second fine-grained area in the target storage area 40 currently targeted by the second operation is located in the second fine-grained area in the inoperable area M1.

As shown in Fig. 5b, after the position of the inoperable area is updated, in the target storage area 40, the operable area includes 5 fine-grained areas (the fine-grained area 41, the fine-grained area 42, the fine-grained area 46, the fine-grained area 47, and the fine-grained area 48), and the inoperable area M1 includes 3 fine-grained areas (the fine-grained area 43, the fine-grained area 44, and the fine-grained area 45).

By adopting the above-mentioned method provided by the present disclosure, the position of the inoperable area can be updated in real time, and the degree of synchronization of fine-grained processing can be improved, thereby further improving the efficiency of data synchronization.

In a possible implementation method, the target storage area may include a circular buffer and storage area. The circular buffer and storage area can be used to store data cyclically.

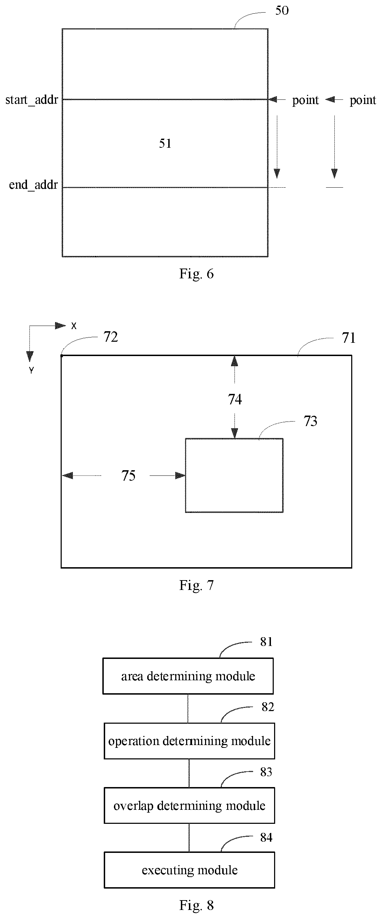

Fig. 6 shows a schematic diagram of a circular buffer and storage area of an operation method of a processor according to an embodiment of the present disclosure. As shown in Fig. 6, a target storage area 50 includes a circular buffer and storage area 51, and the address of the circular buffer and storage area 51 is start_addr~end_addr.

For example, the second operation is a writing operation, by adopting the second operation, the operands may be written into the circular buffer and storage area 51, and the address pointer *point* starts from pointing to the start address start addr, and then the data is stored sequentially until the address pointer *point* points to the end address end addr, in other words, the storage space of the circular buffer 51 is fully occupied, at this time, the address pointer *point* jumps back to start addr to determine whether the address is used by the first operation that needs to be synchronized. After the address is used, the data is stored into this address to cover the original data, and then the address pointer *point* moves downward in turn until the address pointer *point* points to the end addr, at this time, the data may be covered again, and the above process is repeated.

In the embodiment, the circular buffer and storage area is used to store data, which can save data storage space and improve the utilization of storage space.

In a possible implementation method, the circular buffer and storage area can be divided as a plurality of fine-grained areas. For each fine-grained area, whether the data in the fine-grained area can be covered can be managed through a list or flag bit or other methods. For example, a coverage flag bit can be set to indicate whether the data in the fine-grained area can be covered.

For example, the first operation is a reading operation, and the second operation is a writing operation, in other words, reading is performed after writing. A writing pointer wp and a reading pointer rp can be used to indicate fine-grained areas currently targeted by the second operation and the first operation, respectively. When the coverage flag bit of the second fine-grained area currently targeted by the second operation shows that the data can be covered, the second operation can be executed to write data; after the data writing operation is completed, the coverage flag bit of the second fine-grained area is set to show that the data cannot be covered, then wp becomes wp++; the second fine-grained area currently targeted by the second operation is a next fine-grained area, where if wp>end_addr, then wp=start_addr. When there is no overlap between the first fine-grained area and the second fine-grained area currently targeted by the first operation, and the coverage flag bit of the first fine-grained area shows that the data cannot be covered, the first operation can be executed to read data; after the data writing operation is completed, the coverage flag bit of the first fine-grained area is set to show that the data can be covered, then rp becomes rp++; the first fine-grained area currently targeted by the first operation is a next fine-grained area, where if rp>end_addr, then rp=start_addr. When there is an overlap between the first fine-grained area and the second fine-grained area, in other words, when rp=wp, the first operation cannot be executed; after the second operation has been executed on the second fine-grained area currently targeted by the second operation, the first operation will be executed.

In the embodiment, the circular buffer and storage area is divided as a plurality of fine-grained areas, so that a plurality of operations can be simultaneously executed on the circular buffer and storage area, thereby improving the processing efficiency of the processor.

In a possible implementation method, the fine-grained area may include a state indicator, and the state indicator may show whether an operation executed on the fine-grained area is completed or not completed.

The operation method of the processor further includes:
a step S14, when there is no overlap between the first fine-grained area and the second fine-grained area, determining whether the state indicator of the first fine-grained area shows that the operation executed on the first fine-grained area is completed; if the operation executed on the fine-grained area is completed, executing the first operation.

In a possible implementation method, the fine-grained area may include a state indicator, where the state indicator may show whether an operation executed on the fine-grained area is completed or not. For example, the state indicator can be represented by 0 and 1, where 0 represents that the operation executed on the fine-grained area is not completed, 1 represents that the operation executed on the fine-grained area is completed; or 0 represents that the operation executed on the fine-grained area is completed, 1 represents that the operation executed on the fine-grained area is not completed. The present disclosure does not limit the way of representing the state indicator.

In a possible implementation method, the second operation may be executed to set the state indicator of the fine-grained area that has been processed in the target storage area to a completed state, and set the state indicator of the fine-grained area that is not processed or the fine-grained area that is being processed to an incomplete state. And the second operation may be executed to set the state indicator of some fine-grained areas in the fine-grained areas that have been processed to the completed state, and set the state indicator of other fine-grained areas to the incomplete state. For example, when 5 fine-grained areas have been processed in the second operation, the state indicator of the first 3 fine-grained areas can be set to the completed state, and the state indicator of other fine-grained areas can be set to the incomplete state.

In a possible implementation method, when there is an ongoing second operation for the target storage area, for the first fine-grained area currently targeted by the first operation and the second fine-grained area currently targeted by the second operation, whether the first fine-grained area has been processed can be determined after it is determined that there is no overlap between the first fine-grained area and the second fine-grained area; if the first fine-grained area has been processed, the first operation will be executed.

In the embodiment, the fine-grained area may include a state indicator. When there is no overlap between the first fine-grained area and the second fine-grained area, whether the first operation can be executed may be determined according to the state indicator of the first fine-grained area, which can improve the accuracy of data processing while improving the processing efficiency of the processor.

In a possible implementation method, the fine-grained area may include a state indicator, where the state indicator may show whether an operation executed on the fine-grained area is completed or not.

The step S 14 further includes: determining whether the state indicator of the first fine-grained area is a completed state; if the state indicator of the first fine-grained area is a completed state, executing the first operation when there is no overlap between the first fine-grained area and the second fine-grained area.

In other words, when there is an ongoing second operation for the target storage area, for the first fine-grained area currently targeted by the first operation and the second fine-grained area currently targeted by the second operation, after the state indicator of the first fine-grained area is determined as the completed state, whether the first operation can be executed may be determined according to whether there is an overlap between the first fine-grained area and the second fine-grained area; if there is no overlap between the first fine-grained area and the second fine-grained area, the first operation will be executed.

In the embodiment, the fine-grained area may include a state indicator, after the state indicator of the first fine-grained area is determined as the completed state, whether the first operation can be executed may be determined according to whether there is an overlap between the first fine-grained area and the second fine-grained area, which can improve the processing efficiency of the processor while improving the accuracy of data processing.

In a possible implementation method, the second operation is an operation for the descriptor.

In other words, the operand of the second operation is the same as the operand of the first operation, that is, the second operation and the first operation are operations for a same descriptor. The storage area of the operand of the second operation completely overlaps with the target storage area. By adopting the method provided in the embodiment, after the target storage area of the tensor data indicated by the descriptor is divided as a plurality of fine-grained areas, two operations for a same descriptor can be executed in parallel without affecting the result of each operation.

In a possible implementation method, when the operand of the second operation is the same as the operand of the first operation, the first fine-grained area and the second fine-grained area can be determined respectively according to the process of the operation.

In a possible implementation method, before the first operation on the target storage area is executed, it is determined whether there is an ongoing second operation on the target storage area, and the first fine-grained area in the target storage area currently targeted by the first operation is the fine-grained area in the target storage area to be processed in the first operation. For example, before the first operation on the target storage area is executed, the first fine-grained area in the target storage area currently targeted by the first operation is usually a first fine-grained area of the target storage area. At this time, the first operation on the first fine-grained area has not been executed, and the second fine-grained area in the target storage area currently targeted by the ongoing second operation may be related to the process of the second operation. If the second operation has just started, the second fine-grained area may also be the first fine-grained area of the target storage area, at this time, there is an overlap between the first fine-grained area and the second fine-grained area. If the second operation has been executed on the first fine-grained area, the second fine-grained area in the target storage area currently targeted is a P-th fine-grained area (P is an integer greater than 1), and there is no overlap between the first fine-grained area and the second fine-grained area.

In a possible implementation method, when determining whether there is an ongoing second operation for the target storage area during the process of the first operation executed on the target storage area, the first fine-grained area can be determined according to the execution process of the first operation, and the second fine-grained area can be determined according to the execution process of the second operation, and then it can be determined whether there is an overlap between the first fine-grained area and the second fine-grained area. When there is no overlap between the first fine-grained area and the second fine-grained area, the first operation will be executed.

In a possible implementation method, if the cycle of the execution process of each operation is the same, it can be determined whether there is an ongoing second operation for the target storage area only before the first operation for the target storage area is executed, and it can be determined whether there is an overlap between the first fine-grained area and the second fine-grained area, where the same cycle means that when the sizes of the fine-grained areas are the same, two operations have the same operation duration for a fine-grained area.

In a possible implementation method, if the cycle of the execution process of each operation is not consistent or cannot be determined whether to be consistent, during the process of the first operation performed on the target storage area, each time after the operation on the first fine-grained area in the target storage area currently targeted is completed, it is determined whether there is an ongoing second operation for the target operation area, and then it is determined whether there is an overlap between the first fine-grained area and the second fine-grained area to determine whether the first operation may continue to be performed.

In the embodiment, when the operand of the second operation is the same as the operand of the first operation, the method provided in the embodiment of the present disclosure may be adopted to realize the parallel execution of two or more operations for a same descriptor; or the fine-grained area currently targeted by each operation may be determined according to the execution process of each operation. When there is no overlap between the first fine-grained area and the second fine-grained area, the first operation will be performed, so that two or more operations for the same descriptor can be executed in parallel without affecting the execution effect of each operation, thereby improving the execution efficiency of the processor.

In a possible implementation method, there is an overlap between the storage area of the operand of the second operation and the target storage area.

In a possible implementation method, when there is an overlap between the storage area of the operand of the second operation and the target storage area, and the second operation is being executed on the overlap, the storage area of the operand of the second operation and the target storage area may be divided as a plurality of fine-grained areas, respectively, or the whole storage area where the target storage area is located may be divided as a plurality of fine-grained areas, and then according to the method provided in the embodiment of the present disclosure, the fine-grained area in the overlap is determined whether the first operation can be performed, so that two operations on the operands whose storage areas have an overlap may be executed in parallel without affecting the execution result of each operation.

In a possible implementation method, when the second operation is an operation for the descriptor, and the descriptor targeted by the second operation is different from the descriptor targeted by the first operation, whether there is an overlap between the storage area of the operand of the second operation with the target storage area can be determined according to whether it is allowed that there is an overlap between the storage areas of tensor data indicated by the descriptor when the descriptor is created.

In a possible implementation method, when the descriptor is created, if the storage areas of the tensor data indicated by the descriptor are not allowed to overlap, when the descriptor targeted by the second operation is different from the descriptor targeted by the first operation, there is no overlap between the storage area of the tensor data indicated by the descriptor targeted by the second operation and the target storage area, and there is no overlap between the fine-grained area of the first operation and the fine-grained area of the second operation, in this way, there is no need to determine the fine-grained areas targeted by operations with different descriptors.

In a possible implementation method, when the descriptor is created, if the storage areas of the tensor data indicated by the descriptor are allowed to overlap, when the descriptor targeted by the second operation is different from the descriptor targeted by the first operation, there may be an overlap between the fine-grained area of the first operation and the fine-grained area of the second operation, at this time, the method provided in the embodiment of the present disclosure can be adopted, so that two operations for different descriptors with an overlap can be executed in parallel.

In the embodiment, when there is an overlap between the storage area of the operand of the second operation and the target storage area, the method provided by the embodiment of the present disclosure can be used to implement parallel execution of two or more operations, thereby improving the execution efficiency of the processor.

In a possible implementation method, the operation method of the processor further includes: dividing the whole storage area where the target storage area is located as a plurality of fine-grained areas.

In a possible implementation method, the target storage area may be a part of the storage area or the whole storage area of the storage device, and the whole storage area may include a plurality of preset fine-grained areas.

For example, the whole storage area where the target storage area is located is RAM1, where RAM1 may include m preset fine-grained areas (m is a positive integer). The target storage area may occupy n (n is a positive integer, and n<=m) fine-grained areas in the RAMI. It should be noted that the target storage area may also include a part of a fine-grained area. In the RAMI, it is assumed that each fine-grained area is a row in the whole storage area RAMI, and each row is 100 bits. The target storage area may include the first (n-1) complete fine-grained areas and part of the last fine-grained area, such as the first 80 bits in the n-th row (the n-th fine-grained area) in RAMI.

In a possible implementation method, when the whole storage area of the storage device is divided as a plurality of fine-grained areas, for any operation on any target storage area in the whole storage area, the fine-grained areas in the target storage area of the tensor data indicated by the descriptor targeted by the first operation may be determined according to the division result of the fine-grained areas of the whole storage area, and the fine-grained areas in the overlap between the storage area of the operand of the second operation and the target storage area may be also determined according to the division result of the fine-grained areas of the whole storage area. There is a fine-grained area with the same size in the storage area of any operand executed by any operation in the whole storage area.

In a possible implementation method, the size and/or quantity of fine-grained areas of the whole storage area can be determined according to hardware characteristics of a storage device; in other words, the size and/or quantity of fine-grained areas of the whole storage area can be determined according to at least one of the hardware computing capability of the storage device and the hardware bandwidth of the storage device.

In the embodiment, the whole storage area where the target storage area is located is divided as a plurality of fine-grained areas, and any operation on any target storage area in the whole storage area may be executed in a same fine-grained size. Different operations may be executed in parallel by adopting the method provided in the embodiment of the present disclosure, which facilitates synchronization, improves the parallelism of operations, and thereby improves the processing efficiency of the processor.

In a possible implementation method, the operation method of the processor further includes:

according to the division information of the first fine-grained area carried in the first operation, dividing the target storage area as a plurality of fine-grained areas; and
according to the division information of the second fine-grained area carried in the second operation, dividing the storage area of the operand of the second operation as a plurality of fine-grained areas.

In a possible implementation method, the division information of the fine-grained areas may be carried in operations, where the division information of the fine-grained areas may include the size and/or quantity of the fine-grained areas. Different operations may carry different division information of the fine-grained areas, and the same type of operation may carry the same different division information of the fine-grained areas. The division information of the fine-grained areas may be carried in a set position of the operand of the operation, and the identification information of whether to execute division of the fine-grained areas can also be carried in the operation code or the operand. The present disclosure does not limit the content and representation methods in the division information of the fine-grained areas.

In a possible implementation method, the target storage area is divided as a plurality of first fine-grained areas according to the division information of the first fine-grained area carried in the first operation. Other areas in the whole storage area where the tensor data indicated by the descriptor targeted by the first operation is located may not be divided as a plurality of fine-grained areas, or may be divided as a plurality of fine-grained areas according to the division information of the fine-grained areas carried in other operations, which is not limited in the present disclosure.

It can be understood that when the operand of the second operation is the same as the tensor data indicated by the descriptor targeted by the first operation, the storage area of the operand of the second operation completely overlaps the target storage area. The division information of the first fine-grained area and the division information of the second fine-grained area may be the same or different. When the division information of the first fine-grained area is different from the division information of the second fine-grained area, the target storage area may be divided as a plurality of fine-grained areas according to the division information of the second fine-grained area at the same time. In other words, different operations may be adopted to divide the target storage area as a plurality of fine-grained areas with different sizes or quantity. At this time, whether there is an overlap between the first fine-grained area and the second fine-grained area can be determined according to the physical address of the first fine-grained area in the target storage area currently targeted by the first operation and the physical address of the second fine-grained area in the target storage area currently targeted by the second operation; and then, the first operation and the second operation may be executed in parallel according to the determination result.

In a possible implementation method, the division information of fine-grained areas carried in each operation may include the size and/or quantity of the fine-grained areas which are determined according to at least one of the area where the operand with preset length is located and the area where the operand with preset dimension is located, so that the division result of the fine-grained areas may be more in line with the type or attribute of the operands of the operations.

In the embodiment, according to the division information of the first fine-grained area carried in the first operation, the target storage area is divided as a plurality of fine-grained areas; and according to the division information of the second fine-grained area carried in the second operation, the storage area of the operand of the second operation is divided as a plurality of fine-grained areas. Division of fine-grained areas according to the division information of the fine-grained areas carried in operations can make the division result of the fine-grained areas more in line with the requirements of each operation, and therefore, operations may be executed in parallel more flexible.

It should be understood that those skilled in the art can divide and set the target storage area as fine-grained areas according to actual conditions, which is not limited in the present disclosure.

In a possible implementation method, the descriptor may be used to indicate the shape of N-dimensional tensor data, where N is an integer greater than or equal to 0, where the content of the descriptor may include at least one shape parameter representing the shape of the tensor data.

In a possible implementation method, the descriptor can be used to indicate the shape of N-dimensional tensor data, where the value of N can be determined according to a count of dimensions (orders) of the tensor data, and can also be set according to the usage of the tensor data. For example, if the tensor data is 3-dimensional tensor data, the value of N is taken as 3 (the value is determined according to the count of dimensions), and the descriptor can be used to indicate the shape (such as offset, size, *etc.*) of the 3-dimensional tensor data in three dimensions. It should be understood that those skilled in the art can set the value of N according to actual needs, which is not limited in the present disclosure.

In a possible implementation method, the descriptor may include an identifier, content, and the like, and the identifier of the descriptor may be used to distinguish the descriptor, for example, the identifier may be used to number the descriptor; and the content of the descriptor may include at least one shape parameter (such as a size of each dimension of the tensor, *etc.*) representing the shape of the tensor data. The present disclosure does not limit the specific parameters included in the content of the descriptor.

In the embodiment, the descriptor can be used to indicate the shape of tensor data, and the relationship among a plurality of pieces of tensor data can be determined through the shape of the tensor data indicated by the descriptor, thereby improving the access efficiency of the processor.

In a possible implementation method, the identifier and content of the descriptor can be stored in the descriptor storage space, where the descriptor storage space can be a storage space in an internal memory (such as a register, an on-chip SRAM, or other medium caches, *etc.*) of the control unit. The target storage area of the tensor data indicated by the descriptor may be a storage space in the internal memory (such as an on-chip cache) of the control unit or a storage space in an external memory (an off-chip memory) connected to the control unit. The data address in the target storage area may be an actual physical address or a virtual address. The present disclosure does not limit a position of the descriptor storage space and a position of the target storage area, and the type of the data address.

In a possible implementation method, the identifier and content of the descriptor and the tensor data indicated by the descriptor can be located in a same area in the internal memory. For example, a continuous area of an on-chip cache can be used to store related content of the descriptor, where an address of the area is ADDR0-ADDR1023. An address ADDR0-ADDR31 can be used to store the identifier of the descriptor, and an address ADDR32-ADDR63 can be used to store the content of the descriptor, and an address ADDR64-ADDR1023 can be used as a data storage space to store the tensor data indicated by the descriptor. The address ADDR is not limited to 1 bit or 1 byte, and is an address unit used to represent an address. Those skilled in the art can determine the storage space and the addresses thereof according to actual situations, which is not limited in the present disclosure.

In a possible implementation method, the identifier and content of the descriptor, and the tensor data indicated by the descriptor can be stored separately in different areas of an internal memory. For example, a register can be used as the descriptor storage space to store the identifier and content of the descriptor, and an on-chip cache can be used as the whole storage area to store the tensor data indicated by the descriptor.

In a possible implementation method, a special register (SR) may be provided for the descriptor, where the data in the descriptor may be immediate data or can be obtained from the special register. When the register is used to store the identifier and content of the descriptor, a serial number of the register may be used to indicate the identifier of the descriptor. For example, if the serial number of the register is 0, the identifier of the stored descriptor is 0. When the descriptor in the register is valid, an area can be allocated in a caching space (such as creating a tensor cache unit for each tensor data in the cache) according to the size of the tensor data indicated by the descriptor for storing the tensor data. It should be understood that a preset caching space may be also used to store the tensor data, which is not limited in the present disclosure.

In a possible implementation method, the identifier and content of the descriptor can be stored in an internal memory, and the tensor data indicated by the descriptor can be stored in an external memory. For example, on-chip storage of the identifier and content of the descriptor and off-chip storage of the tensor data indicated by the descriptor may be adopted.

In a possible implementation method, the data address of the storage area corresponding to the descriptor may be a fixed address. For example, a separate storage area can be divided as the tensor data, and a start address of each tensor data in the data storage space corresponds to the identifier of the descriptor. In this case, according to the identifier and the corresponding relationship of the descriptor, the target storage area of the tensor data indicated by the descriptor can be directly determined.

In a possible implementation method, the descriptor may be also used to indicate the address of N-dimensional tensor data, where the content of the descriptor may further include at least one address parameter representing the address of the tensor data.

In a possible implementation method, the descriptor may be also used to indicate the address of N-dimensional tensor data, where the address may include, for example, a start address, an address offset, a register address, or other addresses of tensor data. The present disclosure does not limit the type of the address. For example, the address can be a start address of the tensor data, when the data address of the storage area corresponding to the identifier of the descriptor is a fixed address, the start address of the N-dimensional tensor data indicated by the descriptor is a fixed address; when the data address of the storage area corresponding to the identifier of the descriptor is a variable address, the start address of the N-dimensional tensor data indicated by the descriptor can be determined according to a specific storage area, which is not limited in the present disclosure.

In a possible implementation method, the content of the descriptor may also include at least one address parameter representing the address of tensor data. For example, the tensor data is 3-dimensional data, and the descriptor can be used to indicate the address of the tensor data, the content of the descriptor may include an address parameter indicating the address of the tensor data, such as a start physical address of the tensor data; or the content of the descriptor may include a plurality of address parameters of the address of the tensor data, such as a start address + address offset of the tensor data, or address parameters of the tensor data in each dimension. Those skilled in the art can set the address parameters according to actual needs, which is not limited in the present disclosure.

In the embodiment, the descriptor can be used to indicate the address of the tensor data, and the relationship among a plurality of pieces of tensor data can be determined through the shape of the tensor data indicated by the descriptor, thereby improving the access efficiency of the processor.

In a possible implementation method, the address parameter of the tensor data includes a base address of the datum point of the descriptor in the whole storage area of the tensor data.

The shape parameter of the tensor data includes at least one of the followings: a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the address parameter of the tensor data includes a base address of the datum point of the descriptor in the whole storage area of the tensor data, where the base address may be different according to the change of the datum point. The present disclosure does not limit the selection of the datum point.

In a possible implementation method, the base address may include a start address of the whole storage area. When the datum point of the descriptor is a first data block of the whole storage area, the base address of the descriptor is the start address of the whole storage area. When the datum point of the descriptor is not the first data block in the whole storage area, the base address of the descriptor is the physical address of the data block in the whole storage area.

In a possible implementation method, the shape parameter of the tensor data includes at least one of the followings: a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor. The data description position is a mapping position of a point or an area in the tensor data indicated by the descriptor, for example, if the tensor data is a 3-dimensional data, the descriptor can use a coordinate (x, y, z) to represent the shape of the tensor data, and the data description position of the tensor data can be represented by the coordinate (x, y , z), and the data description position of the tensor data may be a position of a point or an area where the tensor data is mapped in a 3-dimensional space.

It should be understood that those skilled in the art may select a shape parameter representing tensor data according to actual conditions, which is not limited in the present disclosure.

As shown in Fig. 7, a whole storage area 21 stores a piece of 2-dimensional data in a row-first manner, where the whole storage area 21 can be represented by (x, y) (where the x axis extends horizontally to the right, and the y axis extends vertically down), a size in the x axis direction (a size of each row) is ori_x (which is not shown in the figure), a size in the y axis direction (total count of rows) is ori_y (which is not shown in the figure), and a start address PA_start (a base address) of the whole storage area 21 is a physical address of a first data block 22. A data block 23 is tensor data in the whole storage area 21, where an offset 25 of the data block 23 in the x axis direction is represented as offset x, an offset 24 of the data block 23 in the y axis direction is represented as offset_y, the size in the x axis direction is represented as size_x, and the size in the y axis direction is represented as size_y.

In a possible implementation method, when the descriptor is used to define the data block 23, the datum point of the descriptor may be a first data block of the whole storage area 21, the base address of the descriptor is the start address PA_start of the whole storage area 21, and then the content of the descriptor of the data block 23 can be determined according to the size ori_x of the whole storage area 21 in the x axis, the size ori_y in the y axis, the offset offset y of the data block 23 in the y axis direction, the offset offset_x of the data block 23 in the x axis direction, the size size x in the x axis direction, and the size size y in the y axis direction.

In a possible implementation method, the following formula (1) can be used to represent the content of the descriptor:

$$\begin{cases} X \text{ direction：} ori\_x, offset\_x, size\_x \\ Y \text{ directio：} ori\_y, offset\_y, size\_y \\ \quad PA\_start \end{cases} \tag{1}$$

It should be understood that although the content of the descriptor represents a 2-dimensional space in the above-mentioned example, those skilled in the art can set the dimensions represented by the content of the descriptor according to actual situations, which is not limited in the present disclosure.

In a possible implementation method, the content of the descriptor of the tensor data may be determined according to the base address of the datum point of the descriptor in the whole storage area and the position of at least two vertices at diagonal positions in N dimensions relative to the datum point.

For example, the content of the descriptor of the data block 23 in Fig. 2 can be determined according to the base address PA_base of the datum point of the descriptor in the entire storage area and the position of two vertices at diagonal positions relative to the datum point. First, the datum point of the descriptor and the base address PA base in the whole storage area are determined, for example, a piece of data (for example, a piece of data at position (2, 2)) in the whole storage area 21 is selected as a datum point, and a physical address of the selected data in the whole storage area is used as the base address PA_base. And then, the position of at least two vertices at diagonal positions of the data block 23 relative to the datum point is determined, for example, the position of vertices at diagonal positions from the top left to the bottom right relative to the datum point is used, where the relative position of the top left vertex is (x_min, y_min), and the relative position of the bottom right vertex is (x max, y_max); and then the content of the descriptor of the data block 73 can be determined according to the base address PA base, the relative position (x_min, y_min) of the top left vertex, and the relative position (x max, y max) of the bottom right vertex.

In a possible implementation method, the following formula (2) can be used to represent the content of the descriptor:

$$\begin{cases} X \text{ direction：} x\_min, x\_max \\ Y \text{ direction：} y\_min, y\_max \\ \quad PA\_base \end{cases} \tag{2}$$

It should be understood that although the top left vertex and the bottom right vertex at diagonal positions are used to determine the content of the descriptor in the above-mentioned example, those skilled in the art may set at least two specific vertices at diagonal positions according to actual needs, which is not limited in the present disclosure.

In a possible implementation method, the content of the descriptor of the tensor data can be determined according to the base address of the datum point of the descriptor in the whole storage area and the mapping relationship between the data description position of the tensor data indicated by the descriptor and the data address of the tensor data indicated by the descriptor, where the mapping relationship between the data description position and the data address can be set according to actual needs. For example, when the tensor data indicated by the descriptor is 3-dimensional spatial data, the function f (x, y, z) can be used to define the mapping relationship between the data description position and the data address.

In a possible implementation method, the following formula (3) can be used to represent the content of the descriptor:

$$\begin{cases} f(x, \ y, \ z) \\ \quad PA\_base \end{cases} \tag{3}$$

It should be understood that those skilled in the art can set the mapping relationship between the data description position and the data address according to actual situations, which is not limited in the present disclosure.

In the embodiment, the base address of the tensor data and at least one shape reference can be used to determine the content of the descriptor, so that different descriptors can be used according to actual needs of each operation.

In a possible implementation method, according to the identifier of the descriptor, the position of the descriptor in the descriptor storage space can be determined, and then the content of the descriptor can be obtained from the descriptor storage space; in this way, according to the content of the descriptor, the data address of the tensor data indicated by the descriptor in the whole storage area can be determined, where the determination of the data address can be completed automatically by hardware or be implemented by software. When the content of the descriptor is different, the determination method of the data address of the tensor data indicated by the descriptor in the whole storage area may be different.

For example, when the formula (1) is used to represent the content of the descriptor, the offsets of the tensor data indicated by the descriptor in the whole storage area are offset_x and offset_y, and the size is size_x*size_y, and then a start data address $PA1_{(x,y)}$ of the tensor data indicated by the descriptor in the whole storage area can be determined using the following formula (4):

$$PA1_{(x,y)} = PA\_start + (offset\_y - 1) * ori\_x + offset\_x \qquad (4)$$

For any datum point in the tensor data indicated by the descriptor, the data description position is set to $(x_q, y_q)$, and then the data address $PA2_{(x,y)}$ of the data in the whole storage area can be determined using the following formula (5):

$$PA2_{(x,y)} = PA\_start + (offset\_y + y_q - 1) * ori\_x + (offset\_x + x_q) \qquad (5)$$

It should be understood that those skilled in the art can determine the computation method of the data address according to the actual situation, which is not limited in the present disclosure.

In the embodiment, the content of the descriptor can be obtained according to the identifier of the descriptor; and according to the content of the descriptor, the data address of the tensor data indicated by the descriptor in the whole storage area can be determined; according to the data address, the target storage area of the tensor data indicated by the descriptor can be determined. In this way, the descriptor can be used during the data access process, thereby reducing the complexity of data access and improving the processing efficiency of the processor.

It should be noted that although the operation method of the processor is described above by taking the above-mentioned embodiment as an example, those skilled in the art can understand that the present disclosure does not limit the specific structure of the data processing apparatus. In fact, users can set various steps flexibly according to personal preferences and/or actual application scenarios, as long as the steps conform to the technical solution of the present disclosure.

Fig. 8 shows a block diagram of an operation apparatus of a processor according to an embodiment of the present disclosure. As shown in Fig. 8, the operation apparatus of the processor includes:

an area determining module 81 configured to obtain a target storage area of tensor data indicated by the descriptor when a first operation is an operation for the descriptor;
an operation determining module 82 configured to determine whether there is an ongoing second operation for the target storage area;
an overlap determining module 83 configured to determine, when there is a second operation, whether there is an overlap between a first fine-grained area in the target storage area currently targeted by the first operation and a second fine-grained area in the target storage area currently targeted by the second operation; and
an executing module 84 configured to execute the first operation when there is no overlap between the first fine-grained area and the second fine-grained area.

In a possible implementation method, the operation apparatus of the processor further includes an execution control module configured to block the first operation when there is an overlap between the first fine-grained area and the second fine-grained area.

In a possible implementation method, at least one of the first operation and the second operation is a writing operation.

In a possible implementation method, the size and/or quantity of fine-grained areas may be determined according to at least one of the area where the data with a preset length is located and the area where the data with a preset dimension is located.

In a possible implementation method, the size and/or quantity of the fine-grained areas may be determined according to at least one of the hardware computing capability and the hardware bandwidth .

In a possible implementation method, the first operation is an operation in a first processing instruction, and the second operation is an operation in a second processing instruction, where the second processing instruction may be a processing instruction prior to the first processing instruction in an instruction queue.

In a possible implementation method, the operation apparatus of the processor further includes a position recording module configured to record a first position information of a first fine-grained area currently operated in the first operation and a second position information of a second fine-grained area currently operated in the second operation.

The executing module 84 includes a first executing sub-module configured to execute the first operation when the first position information is inconsistent with the second position information.

In a possible implementation method, the first position information may include a first count of fine-grained areas that have been processed in the first operation, and the second position information may include a second count of fine-grained areas that have been processed in the second operation.

The first executing sub-module is further configured to execute the first operation when the first operation is an operation after the second operation and the first count is less than the second count.

In a possible implementation method, the target storage area may include an operable area and an inoperable area. The overlap determining module 83 includes a determining sub-module configured to, when there is a second operation and the first fine-grained area in the target storage area currently targeted by the first operation is located in the operable area, determine whether there is an overlap between the first fine-grained area in the target storage area currently targeted by the first operation and the second fine-grained area in the target storage area currently targeted by the second operation.

In a possible implementation method, the inoperable area may include a plurality of fine-grained areas including the second fine-grained area, and the position of the second fine-grained area in the inoperable area is updated with the operating position of the second operation. The operation apparatus of the processor further includes an updating module configured to update the position of the inoperable area after the second fine-grained area in the target storage area targeted by the second operation is moved out of the inoperable area.

In a possible implementation method, the inoperable area may include a plurality of fine-grained areas including the second fine-grained area, and the second fine-grained area is located at a set position in the inoperable area, and the position of the inoperable area is updated with the operating position of the second operation.

In a possible implementation method, the target storage area may include a circular buffer and storage area.

In a possible implementation method, the fine-grained area may include a state indicator, and the state indicator may show whether an operation executed on the fine-grained area is completed or not completed. The executing module 84 includes:

a first state determining sub-module configured to, when there is no overlap between the first fine-grained area and the second fine-grained area, determine whether the state indicator of the first fine-grained area shows that the operation executed on the first fine-grained area is completed; and

a second executing sub-module configured to execute the first operation when the state indicator of the first fine-grained area shows that the operation executed on the first fine-grained area is completed.

In a possible implementation method, the fine-grained area may include a state indicator, and the state indicator may show whether an operation executed on the fine-grained area is completed or not completed. The executing module 84 further includes:

a second state determining sub-module configured to determine whether the state indicator of the first fine-grained area shows that the operation executed on the first fine-grained area is completed; and

a third executing sub-module configured to execute the first operation when the state indicator of the first fine-grained area shows that the operation executed on the first fine-grained area is completed, and there is no overlap between the first fine-grained area and the second fine-grained area.

In a possible implementation method, the second operation may be an operation for the descriptor.

In a possible implementation method, there is an overlap between the storage area of the operand of the second operation and the target storage area.

In a possible implementation method, the operation apparatus of the processor further incudes a first setting module configured to divide the whole storage area where the target storage area is located as a plurality of fine-grained areas.

In a possible implementation method, the operation apparatus of the processor further incudes:

a second setting module configured to divide the target storage area as a plurality of fine-grained areas according to division information of the first fine-grained carried in the first operation; and

a third setting module configured to divide the storage area of the operand of the second operation as a plurality of fine-grained areas according to division information of the second fine-grained carried in the second operation.

In a possible implementation method, the descriptor may be used to indicate the shape of the N-dimensional tensor data, where N is an integer greater than or equal to 0, where the content of the descriptor may include at least one shape parameter representing the shape of the tensor data.

In a possible implementation method, the descriptor may be also used to indicate the address of N-dimensional tensor data, where the content of the descriptor may further include at least one address parameter representing the address of the tensor data.

In a possible implementation method, the address parameter of the tensor data includes a base address of the datum point of the descriptor in the whole storage area of the tensor data. The shape parameter of the tensor data includes at least one of the followings: a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

In a possible implementation method, the present disclosure further provides an artificial intelligence chip including the operation apparatus of the processor.

In a possible implementation method, the present disclosure further provides a board card including a storage device, an interface apparatus, a control device, and the above-mentioned artificial intelligence chip. The artificial intelligence chip is connected to the storage device, the control device, and the interface apparatus, respectively; the storage device is configured to store data; the interface apparatus is configured to implement data transfer between the artificial intelligence chip and the external equipment; and the control device is configured to monitor the state of the artificial intelligence chip.

In a possible implementation method, the storage device includes a plurality of groups of storage units, where each group of the storage units is connected with the neural network chip by a bus, and the storage units are DDR SDRAM; the chip includes a DDR controller configured to control data transfer and data storage of each storage unit; and the interface apparatus is a standard PCIE interface.

A1. An operation method of a processor, comprising:

when a first operation is an operation for a descriptor, obtaining a target storage area of tensor data indicated by the descriptor;

determining whether there is an ongoing second operation for the target storage area;

when there is a second operation, determining whether there is an overlap between a first fine-grained area in the target storage area targeted by a first operation and a second fine-grained area in the target storage area targeted by a second operation; and

executing the first operation when there is no overlap between the first fine-grained area and the second fine-grained area.

A2. The operation method of the processor of A1, further comprising:

when there is an overlap between the first fine-grained area and the second fine-grained area, blocking the first operation.

A3. The operation method of the processor of A1, wherein

at least one of the first operation and the second operation is a writing operation.

A4. The operation method of the processor of A1, wherein a size and/or quantity of fine-grained areas can be determined according to at least one of an area where the data with preset length is located and an area where the data with preset dimension is located.

A5. The operation method of the processor of A1, wherein the size and/or quantity of the fine-grained areas can be determined according to at least one of a computing capability of hardware and a bandwidth of the hardware.

A6. The operation method of the processor of A1, wherein the first operation is an operation in a first processing instruction, the second operation is an operation in a second processing instruction, and the second processing instruction is a processing instruction prior to the first processing instruction in an instruction queue.

A7. The operation method of the processor of any one of A1-A6, further comprising:

recording a first position information of the first fine-grained area currently operated by the first operation and a second position information of the second fine-grained area currently operated by the second operation; and executing the first operation when there is no overlap between the first fine-grained area and the second fine-grained area, which comprises:

executing the first operation when the first position information is inconsistent with the second position information.

A8. The operation method of the processor of A7, wherein the first position information includes a first count of fine-grained areas that have been processed in the first operation, and the second position information includes a second count of fine-grained areas that have been processed in the second operation, wherein

the first operation is executed when the first position information is inconsistent with the second position information, which includes:

executing the first operation when the first operation is an operation after the second operation, and the first count is less than the second count.

A9. The operation method of the processor of A1, wherein the target storage area includes an operable area and an inoperable area, and when there is the second operation, the determining whether there is an overlap between a first fine-grained area in the target storage area targeted by a first operation and a second fine-grained area in the target storage area targeted by a second operation includes:

when there is the second operation, and the first fine-grained area in the target storage area currently targeted by the first operation is located in the operable area, determining whether there is an overlap between the first fine-grained area in the target storage area currently targeted by the first operation and the second fine-grained area in the target storage area currently targeted by the second operation.

A10. The operation method of the processor of A9, wherein the inoperable area is a plurality of fine-grained areas including the second fine-grained area, and a position of the second fine-grained area in the inoperable area is updated with an operating position of the second operation, wherein the operation method of the processor further includes:

updating a position of the inoperable area after the second fine-grained area in the target storage area targeted by the second operation is moved out of the inoperable area.

A11. The operation method of the processor of A9, wherein the inoperable area includes a plurality of fine-grained areas including the second fine-grained area, and the second fine-grained area is located at a set position in the inoperable area, and the position of the inoperable area is updated with the operating position of the second operation.

A12. The operation method of the processor of A1, wherein the target storage area includes a circular buffer and storage area.

A13. The operation method of the processor of A1, wherein the fine-grained area includes a state indicator, and the state indicator shows whether an operation executed on the fine-grained area is completed or not completed, wherein the executing the first operation when there is no overlap between the first fine-grained area and the second fine-grained area includes:

when there is no overlap between the first fine-grained area and the second fine-grained area, determining whether a state indicator of the first fine-grained area shows that the operation executed on the first fine-grained area is completed;

if the state indicator of the first fine-grained area shows that the operation executed on the first fine-grained area is completed, executing the first operation.

A14. The operation method of the processor of A1, wherein the fine-grained area includes the state indicator, and the state indicator shows whether an operation executed on the fine-grained area is completed or not completed, wherein the executing the first operation when there is no overlap between the first fine-grained area and the second fine-grained area includes:

determining whether the state indicator of the first fine-grained area shows that the operation executed on the first fine-grained area is completed;

if the state indicator of the first fine-grained area shows that the operation executed on the first fine-grained area is completed, executing the first operation when there is no overlap between the first fine-grained area and the second fine-grained area.

A15. The operation method of the processor of A1, wherein the second operation is an operation for the descriptor.

A16. The operation method of the processor of A1, wherein there is an overlap between the storage area of the operand of the second operation and the target storage area.

A17. The operation method of the processor of any one of A1-A16, further comprising:

dividing a whole storage area where the target storage area is located as a plurality of fine-grained areas.

A18. The operation method of the processor of any one of A1-A17, further comprising:

dividing the target storage area as a plurality of fine-grained areas according to division information of the first fine-grained area carried in the first operation; and
dividing the storage area of the operand of the second operation as a plurality of fine-grained areas according to division information of the second fine-grained area carried in the second operation.

A19. The operation method of the processor of A1, wherein the descriptor is used to indicate a shape of N-dimensional tensor data, where N is an integer greater than or equal to 0, wherein
the content of the descriptor includes at least one shape parameter representing the shape of the tensor data.

A20. The operation method of the processor of A19, wherein the descriptor is used to indicate an address of the N-dimensional tensor data, wherein
the content of the descriptor includes at least one address parameter representing the address of the tensor data.

A21. The operation method of the processor of A20, wherein the address parameter of the tensor data includes a base address of a datum point of the descriptor in the whole storage area of the tensor data, wherein the shape parameter of the tensor data includes at least one of the followings:
a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A22. An operation apparatus of a processor, comprising:

an area determining module configured to, when a first operation is an operation for a descriptor, obtain a target storage area of tensor data indicated by the descriptor;
an operation determining module configured to determine whether there is an ongoing second operation for the target storage area;
an overlap determining module configured to determine, when there is a second operation, whether there is an overlap between a first fine-grained area in the target storage area currently targeted by the first operation and a second fine-grained area in the target storage area currently targeted by the second operation; and
an executing module configured to execute the first operation when there is no overlap between the first fine-grained area and the second fine-grained area.

A23. The operation apparatus of the processor of A22, further comprising:
an execution control module configured to block the first operation when there is an overlap between the first fine-grained area and the second fine-grained area.

A24. The operation apparatus of the processor of A22, wherein at least one of the first operation and the second operation is a writing operation.

A25. The operation apparatus of the processor of A22, wherein a size and/or quantity of fine-grained areas is determined according to at least one of an area where data with preset length is located and an area where data with preset dimension is located.

A26. The operation apparatus of the processor of A22, wherein the size and/or quantity of the fine-grained areas is determined according to at least one of a hardware computing capability and a hardware bandwidth.

A27. The operation apparatus of the processor of A22, wherein the first operation is an operation in a first processing instruction, the second operation is an operation in a second processing instruction, and the second processing instruction is a processing instruction prior to the first processing instruction in an instruction queue.

A28. The operation apparatus of the processor of any one of A22-A27, further comprising:
a position recording module configured to record a first position information of the first fine-grained area currently operated in the first operation and a second position information of the second fine-grained area currently operated in the second operation,
wherein the executing module includes:
a first executing sub-module configured to execute the first operation when the first position information is inconsistent with the second position information.

A29. The operation apparatus of the processor of A28, wherein the first position information includes a first count of fine-grained areas that have been processed in the first operation, and the second position information includes a second count of fine-grained areas that have been processed in the second operation, wherein
the first executing sub-module is further configured to execute the first operation when the first operation is an operation after the second operation, and the first count is less than the second count.

A30. The operation apparatus of the processor of A22, wherein the target storage area includes an operable area and an inoperable area, and the overlap determining module includes:

a determining sub-module configured to, when there is the second operation and the first fine-grained area in the target storage area currently targeted by the first operation is located in the operable area, determine whether there is an overlap between the first fine-grained area in the target storage area currently targeted by the first operation and the second fine-grained area in the target storage area currently targeted by the second operation.

A31. The operation apparatus of the processor of A30, wherein the inoperable area is a plurality of fine-grained areas including the second fine-grained area, and a position of the second fine-grained area in the inoperable area is updated with an operating position of the second operation, and the operation apparatus of the processor further includes:

an updating module configured to update the position of the inoperable area after the second fine-grained area in the target storage area targeted by the second operation is moved out of the inoperable area.

A32. The operation apparatus of the processor of A30, wherein the inoperable area includes a plurality of fine-grained areas including the second fine-grained area, and the second fine-grained area is located at a set position in the inoperable area, wherein

the position of the inoperable area is updated with the operating position of the second operation.

A33. The operation apparatus of the processor of A22, wherein the target storage area includes a circular buffer and storage area.

A34. The operation apparatus of the processor of A22, wherein the fine-grained area includes a state indicator, and the state indicator shows whether an operation executed on the fine-grained area is completed or not completed, wherein the executing module includes:

a first state determining sub-module configured to, when there is no overlap between the first fine-grained area and the second fine-grained area, determine whether the state indicator of the first fine-grained area shows that the operation executed on the first fine-grained area is completed; and

a second executing sub-module configured to execute the first operation when the state indicator of the first fine-grained area shows that the operation executed on the first fine-grained area is completed.

A35. The operation apparatus of the processor of A22, wherein the fine-grained area includes the state indicator, and the state indicator shows whether the operation executed on the fine-grained area is completed or not completed, wherein the executing module further includes:

a second state determining sub-module configured to determine whether the state indicator of the first fine-grained area shows that the operation executed on the first fine-grained area is completed; and

a third executing sub-module configured to execute the first operation when the state indicator of the first fine-grained area shows that the operation executed on the first fine-grained area is completed and there is no overlap between the first fine-grained area and the second fine-grained area.

A36. The operation apparatus of the processor of A22, wherein the second operation is an operation for the descriptor.

A37. The operation apparatus of the processor of A22, wherein there is an overlap between a storage area of an operand of the second operation and the target storage area.

A38. The operation apparatus of the processor of any one of A22-A37, further comprising:

a first setting module configured to divide a whole storage area where the target storage area is located as a plurality of fine-grained areas.

A39. The operation apparatus of the processor of any one of A22-A37, further comprising:

a second setting module configured to divide the target storage area as a plurality of fine-grained areas according to division information of the first fine-grained carried in the first operation; and

a third setting module configured to divide the storage area of the operand of the second operation as a plurality of fine-grained areas according to division information of the second fine-grained carried in the second operation.

A40. The operation apparatus of the processor of A22, wherein the descriptor is used to indicate a shape of N-dimensional tensor data, where N is an integer greater than or equal to 0, wherein content of the descriptor includes at least one shape parameter representing the shape of the tensor data.

A41. The operation apparatus of the processor of A40, wherein the descriptor is also used to indicate an address of N-dimensional tensor data, where the content of the descriptor further includes at least one address parameter representing the address of the tensor data.

A42. The operation apparatus of the processor of A41, wherein the address parameter of the tensor data includes a base address of a datum point of the descriptor in the whole storage area of the tensor data, wherein the shape parameter of the tensor data includes at least one of the followings:

a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and the data address of the tensor data indicated by the descriptor.

A43. An artificial intelligence chip, comprising the operation apparatus of the processor of any one of A22-A42.

A44. An electronic device, comprising the artificial intelligence chip of A43.

A45. A board card, comprising a storage device, an interface apparatus, a control device, and the artificial intelligence chip of A43, wherein

the artificial intelligence chip is connected to the storage device, the control device, and the interface apparatus, respectively;

the storage device is configured to store data;

the interface apparatus is configured to implement data transfer between the artificial intelligence chip and an external equipment; and

the control device is configured to monitor a state of the artificial intelligence chip.

A46. The board card of A45, wherein the storage device includes a plurality of groups of storage units, wherein each group of the storage units is connected with a neural network chip by a bus, and the storage units are DDR SDRAM; the chip includes a DDR controller configured to control data transfer and data storage of each storage unit; and the interface apparatus is a standard PCIE interface.

The embodiments of the present disclosure have been described above, and the above description is exemplary, not exhaustive, and is not limited to the disclosed embodiments. Without departing from the scope and spirit of the described embodiments, many modifications and changes are obvious to those ordinary skilled in the art. The choice of terms used herein is intended to best explain the principles, practical applications, or improvements to technologies in the market of the embodiments, or to enable other ordinary skilled in the art to understand the embodiments disclosed herein.

## Claims

1. An operation method of a processor, comprising:

    when a first operation is an operation for a descriptor, obtaining a target storage area of tensor data indicated by the descriptor,
    determining whether there is an ongoing second operation for the target storage area,
    when there is a second operation, determining whether there is an overlap between a first fine-grained area in the target storage area targeted by the first operation and a second fine-grained area in the target storage area targeted by the second operation, and
    executing the first operation when there is no overlap between the first fine-grained area and the second fine-grained area.

2. The operation method of the processor of claim 1, wherein a size and/or quantity of fine-grained areas can be determined according to at least one from the following: an area where data with preset length is located, an area where data with preset dimension is located, a computing capability of hardware, and a bandwidth of the hardware.

3. The operation method of the processor of claim 1, wherein the first operation is an operation in a first processing instruction, the second operation is an operation in a second processing instruction, and the second processing instruction is a processing instruction prior to the first processing instruction in an instruction queue.

4. The operation method of the processor of any one of claims 1-3, further comprising:

    recording a first position information of the first fine-grained area currently operated by the first operation and a second position information of the second fine-grained area currently operated by the second operation, and executing the first operation when there is no overlap between the first fine-grained area and the second fine-grained area, which comprises:

executing the first operation when the first position information is inconsistent with the second position information.

preferably, executing the first operation when the first operation is an operation after the second operation, and the first count is less than the second count.

5. The operation method of the processor of claim 1, wherein the target storage area includes an operable area and an inoperable area, and when there is a second operation, the determining whether there is an overlap between a first fine-grained area in the target storage area targeted by a first operation and a second fine-grained area in the target storage area targeted by a second operation includes:

when there is a second operation, and the first fine-grained area in the target storage area currently targeted by the first operation is located in the operable area, determining whether there is an overlap between the first fine-grained area in the target storage area currently targeted by the first operation and the second fine-grained area in the target storage area currently targeted by the second operation.

6. The operation method of the processor of claim 5, wherein the inoperable area is a plurality of fine-grained areas including the second fine-grained area, and a position of the second fine-grained area in the inoperable area is updated with an operating position of the second operation, wherein the operation method of the processor further includes:

updating a position of the inoperable area after the second fine-grained area in the target storage area targeted by the second operation is moved out of the inoperable area.

7. The operation method of the processor of claim 5, wherein the inoperable area includes a plurality of fine-grained areas including the second fine-grained area, and the second fine-grained area is located at a set position in the inoperable area, and the position of the inoperable area is updated with the operating position of the second operation.

8. The operation method of the processor of claim 1, wherein the fine-grained area includes a state indicator, and the state indicator shows whether an operation executed on the fine-grained area is completed or not completed, wherein the executing the first operation when there is no overlap between the first fine-grained area and the second fine-grained area includes:

when there is no overlap between the first fine-grained area and the second fine-grained area, determining whether a state indicator of the first fine-grained area shows that the operation executed on the first fine-grained area is completed,

if the state indicator of the first fine-grained area shows that the operation executed on the first fine-grained area is completed, executing the first operation.

9. The operation method of the processor of claim 1, wherein the fine-grained area includes a state indicator, and the state indicator shows whether an operation executed on the fine-grained area is completed or not completed, wherein the executing the first operation when there is no overlap between the first fine-grained area and the second fine-grained area includes:

determining whether the state indicator of the first fine-grained area shows that the operation executed on the first fine-grained area is completed,

if the state indicator of the first fine-grained area shows that the operation executed on the first fine-grained area is completed, executing the first operation when there is no overlap between the first fine-grained area and the second fine-grained area.

10. The operation method of the processor of claim 1, wherein the descriptor is used to indicate a shape of N-dimensional tensor data, where N is an integer greater than or equal to 0, wherein content of the descriptor includes at least one shape parameter representing the shape of the tensor data.

preferably, the shape parameter of the tensor data includes at least one of followings:

a size of the whole storage area of the tensor data in at least one of N dimensions, a size of the storage area of the tensor data in at least one of N dimensions, an offset of the storage area of the tensor data in at least one of N dimensions, a position of at least two vertices at diagonal positions in N dimensions relative to the datum point, and a mapping relationship between a data description position of the tensor data indicated by the descriptor and a data address of the tensor data indicated by the descriptor;

11. The operation method of the processor of claim 10, wherein the descriptor is further used to indicate an address of the N-dimensional tensor data, wherein the content of the descriptor includes at least one address parameter representing the address of the tensor data,

preferably, the address parameter of the tensor data includes a base address of a datum point of the descriptor in the whole storage area of the tensor data

12. An operation apparatus of a processor, comprising means for carrying out the method of any of claims 1 to 11.

13. An artificial intelligence chip, comprising the operation apparatus of the processor of claim 12.

14. An electronic device, comprising the artificial intelligence chip of claim 13.

15. A board card, comprising a storage device, an interface apparatus, a control device, and the artificial intelligence chip of claim 13, wherein

the artificial intelligence chip is connected to the storage device, the control device, and the interface apparatus, respectively,

the storage device is configured to store data,

the interface apparatus is configured to implement data transfer between the artificial intelligence chip and an external equipment, and the control device is configured to monitor a state of the artificial intelligence chip.

100

processor

200

storage device
210

| 211 |
| 211 |
| ...... |
| 211 |

Fig. 1

S11

when a first operation is an operation for a descriptor, obtaining a target storage area of tensor data indicated by the descriptor

S12

determining whether there is an ongoing second operation for the target storage area

S13

when there is an second operation, determining whether there is an overlap between a first fine-grained area in the target storage area targeted by the first operation and a second fine-grained area in the target storage area targeted by the second operation

S14

executing the first operation when there is no overlap between the first fine-grained area and the second fine-grained area

Fig. 2

20

| |
|---|
| |
| wp → 22 |
| 23 |
| 24 |
| 25 |
| |

21

Fig. 3a

20

| |
|---|
| |
| rp → 22 |
| 23 |
| wp → 24 |
| 25 |
| |

21

Fig. 3b

30

| |
|---|
| 31 |
| 32 |
| 33 |
| 34 |
| 35 |
| 36 |
| 37 |
| 38 |

M0

Fig. 4a

30

| |
|---|
| 31 |
| 32 |
| 33 |
| 34 |
| 35 |
| 36 |
| 37 |
| 38 |

M0

Fig. 4b

40

| |
|---|
| 41 |
| 42 |
| 43 |
| 44 |
| 45 |
| 46 |
| 47 |
| 48 |

M1

Fig. 5a

40

| |
|---|
| 41 |
| 42 |
| 43 |
| 44 |
| 45 |
| 46 |
| 47 |
| 48 |

M1

Fig. 5b

50

51

start_addr

end_addr

point ◄── point

Fig. 6

X

72

71

Y

74

73

75

Fig. 7

81

area determining module

82

operation determining module

83

overlap determining module

84

executing module

Fig. 8

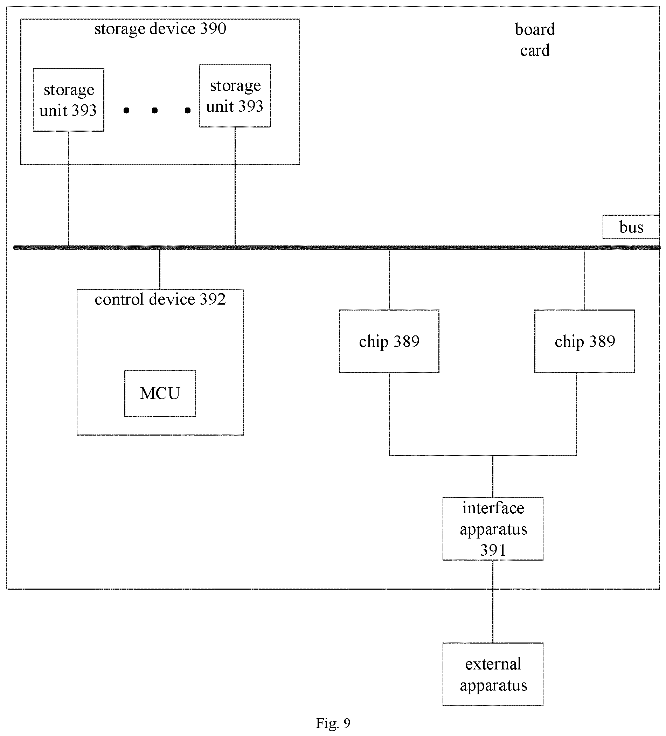

Fig. 9

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/040666 A1 (AMAZON TECH INC [US]) 17 March 2016 (2016-03-17) * paragraph [0051] - paragraph [0255]; figures 1-47 * ----- | 1-15 | INV. G06F9/38 G06F9/30 |
| A | US 6 275 920 B1 (ABERCROMBIE ANDREW P [US] ET AL) 14 August 2001 (2001-08-14) * column 4, line 42 - column 5, line 25; figures 1-43C * * column 57, line 38 - column 58, line 40 * * column 83, line 1 - column 84, line 9 * * line 13, paragraph 92 - line 44, paragraph 94 * ----- | 1-15 | |

TECHNICAL FIELDS
SEARCHED      (IPC)

G06F

The present search report has been drawn up for all claims

| Place of search | Date of completion of the search | Examiner |
|---|---|---|
| The Hague | 8 April 2021 | Freitas, Arthur |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 7330

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2021

| Patent document cited in search report | | Publication date | Patent family member(s) | | Publication date |
|---|---|---|---|---|---|
| WO 2016040666 | A1 | 17-03-2016 | CA | 2960988 A1 | 17-03-2016 |
| | | | CA | 3040213 A1 | 17-03-2016 |
| | | | CN | 107077492 A | 18-08-2017 |
| | | | EP | 3191984 A1 | 19-07-2017 |
| | | | JP | 6346376 B2 | 20-06-2018 |
| | | | JP | 6677759 B2 | 08-04-2020 |
| | | | JP | 2017531256 A | 19-10-2017 |
| | | | JP | 2018163671 A | 18-10-2018 |
| | | | WO | 2016040666 A1 | 17-03-2016 |
| US 6275920 | B1 | 14-08-2001 | AU | 3636699 A | 01-11-1999 |
| | | | CO | 4880829 A1 | 31-01-2000 |
| | | | EP | 1068592 A2 | 17-01-2001 |
| | | | TW | 428152 B | 01-04-2001 |
| | | | US | 6212628 B1 | 03-04-2001 |
| | | | US | 6275920 B1 | 14-08-2001 |
| | | | WO | 9953439 A2 | 21-10-1999 |

EPO FORM P0459

For more details about this annex : see Official Journal of the European Patent Office, No. 12/82